# EUROPEAN PATENT APPLICATION

(11) **EP 4 635 689 A1**
(43) Date of publication of application: **22.10.2025**
(21) Application number: 23903162.8
(22) Date of filing: 09.11.2023
(51) Int. Cl.: B25J 13/08, B25J 5/00

(54) **ROBOT SYSTEM**

(30) Priority: 12.12.2022 JP 2022198163
(71) Applicant: OMRON Corporation, Kyoto 600-8530 (JP); CHUGAI SEIYAKU KABUSHIKI KAISHA, Tokyo 115-8543 (JP)
(72) Inventor: SHIBATA, Yoshiya, Kyoto-shi, Kyoto 600-8530 (JP); NAKASHIMA, Chisato, Kyoto-shi, Kyoto 600-8530 (JP); NABETO, Misato, Kyoto-shi, Kyoto 600-8530 (JP); YASE, Satoshi, Kyoto-shi, Kyoto 600-8530 (JP)
(74) Representative: SONN Patentanwälte GmbH & Co KG
(86) International application number: PCT/JP2023/040473
(87) International publication number: WO 2024/127864

(57) **Abstract**

A robot system (100) includes a workbench robot (20) that is fixed to a workbench and includes a mechanism for gripping an object on the workbench, and a centralized controller (30) that controls an operation of the workbench robot (20), in which the centralized controller (30) executes a weighing process of causing the workbench robot (20) to grip a spatula, perform an operation of scooping and transferring a powdery material, a particle, or a viscous material as a weighing target, which is put in an original container, to a transfer destination container by using the spatula, measure a weight of the material in the transfer destination container by using a scale, and acquire a measurement result.

## Description

### Technical Field

The present disclosure relates to a robot system.

### Background Art

In a chemical experiment or an experiment of handling a biological sample, weighing including work of scooping and transferring a material such as a medicine that is a powder, a particle, or a viscous material, from an original container to a transfer destination container using a spatula may be performed with the hand of a researcher. Patent Literature 1 discloses a robot that collects a target object, which is a powder, a particle, a liquid, or a viscous material, from a container and transfers the target object to another container.

### Citation List

### Patent Literature

Patent Literature 1: Japanese Patent Publication No. 6978023

### SUMMARY OF INVENTION

### Technical Problem

Automation using a machine is desired for all of chemical experiments and experiments of handling biological samples, and preferably, the above-described weighing can also be automated. In the field of chemical experiments and experiments of handling biological samples, the exact weight of the weighed material is often required. In addition, it is preferable to be able to reduce the difference between the target weight of the weighing and the actual weight of the scooped material as much as possible, and as a premise to be able to reduce the difference, it is important to be able to acquire a value with less error in the weight of the scooped material.

In the robot disclosed in Patent Literature 1, an operation of dropping an excess of the collection amount from a collection unit is performed in order to bring the one collection amount of the collection unit of the robot close to the target value. In this method, it is difficult to estimate the actual collection amount with high accuracy and to control the amount to be dropped with high accuracy. Therefore, even though the robot is practical in a situation of weighing a seasoning used for cooking or the like, it is difficult to apply the robot to a situation of weighing in a chemical experiment or an experiment of handling a biological sample, in which weight accuracy on the order smaller than milligrams becomes a problem, for example.

An object of the disclosure is to provide a robot system capable of automating weighing of a material that is a powder, a particle, or a viscous material from an original container to a transfer destination container using a spatula, and acquiring a weight of the material transferred to the transfer destination container with accuracy that is usable in a scene of a chemical experiment or an experiment of handling a biological sample.

### Solution to Problem

To achieve the above object, a robot system according to the disclosure includes a workbench robot that is fixed to a workbench and includes a mechanism for gripping an object on the workbench, and a controller that controls an operation of the workbench robot. The controller executes a weighing process of causing the workbench robot to grip a spatula, perform an operation of scooping and transferring a powdery material, a particle, or a viscous material as a weighing target, which is contained in an original container, to a transfer destination container by using the spatula, measure a weight of the material in the transfer destination container by using a scale, and acquire a measurement result.

### Advantageous Effects of Invention

According to the robot system according to the disclosure, it is possible to automate weighing of a material that is a powder, a particle, or a viscous material from an original container to a transfer destination container using a spatula, and acquire a weight of the material transferred to the transfer destination container with accuracy that is usable in a scene of a chemical experiment or an experiment of handling a biological sample.

### BRIEF DESCRIPTION OF DRAWINGS

Fig. 1 is a functional block diagram of a robot system according to first and second embodiments.
Fig. 2 is an external perspective view of a workbench robot.
Fig. 3 is a schematic plan view illustrating an example of arrangement of experimental tools and the like on a workbench.
Fig. 4 is a view illustrating an example of an original container.
Fig. 5 is a view illustrating an example of a transfer destination container.
Fig. 6 is a view illustrating an example of a container rack.
Fig. 7 is a view illustrating a state in which the transfer destination container stands on a stand.
Fig. 8 is a view illustrating an example of a spatula.
Fig. 9 is a view illustrating an example of a spatula rack.
Fig. 10 is a view illustrating an example of a scale.
Fig. 11 is a block diagram illustrating a hardware configuration of a centralized controller.
Fig. 12 is a flowchart illustrating a flow of control processing in the first embodiment.
Fig. 13 is a view for describing scooping and transferring.
Fig. 14 is a view for describing scooping and transferring.
Fig. 15 is a view for describing another example of a method of gripping the spatula.
Fig. 16 is a flowchart illustrating a flow of control processing in the second embodiment.
Fig. 17 is a view for describing injection of a solvent liquid into the transfer destination container.
Fig. 18 is a schematic plan view illustrating an example of an experimental environment in which a robot system according to a third embodiment operates.
Fig. 19 is a block diagram illustrating a schematic configuration of a robot system according to third to fifth embodiments.
Fig. 20 is an external perspective view of a mobile manipulator.
Fig. 21 is a flowchart illustrating a flow of control processing in the third embodiment.
Fig. 22 is a flowchart illustrating another example of the flow of the control processing in the third embodiment.
Fig. 23 is a flowchart illustrating a flow of control processing in the fourth embodiment.
Fig. 24 is a flowchart illustrating another example of the flow of the control processing in the fourth embodiment.
Fig. 25 is a flowchart illustrating still another example of the flow of the control processing in the fourth embodiment.
Fig. 26 is a flowchart illustrating a flow of control processing in the fifth embodiment.
Fig. 27 is a flowchart illustrating still another example of the flow of the control processing in the fifth embodiment.
Fig. 28 is a flowchart illustrating still another example of the flow of the control processing in the fifth embodiment.
Fig. 29 is a flowchart illustrating still another example of the flow of the control processing in the fifth embodiment.
Fig. 30A is a diagram for describing another example of the configuration of the controller.
Fig. 30B is a diagram for describing still another example of the configuration of the controller.
Fig. 31A is a diagram for describing still yet another example of the configuration of the controller.
Fig. 31B is a diagram for describing still yet another example of the configuration of the controller.

### DESCRIPTION OF EMBODIMENTS

Hereinafter, examples of embodiments of the technique of the disclosure will be described with reference to the drawings. In the drawings, the same or equivalent components and portions are denoted by the same reference signs. Dimensions and ratios of the drawings are exaggerated for convenience of description, and may be different from actual ratios.

### <First Embodiment>

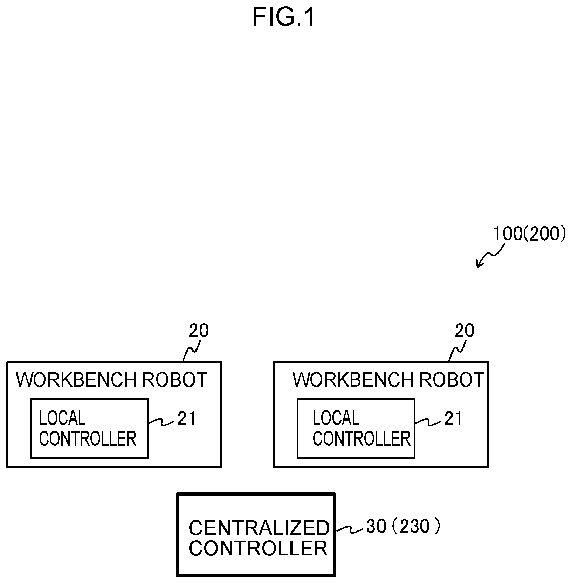

As illustrated in Fig. 1, a robot system 100 according to a first embodiment includes one or more workbench robots 20 and a centralized controller 30. In the example of Fig. 1, an example in which there are two workbench robots 20 is illustrated, but the disclosure is not limited thereto. One or three or more of each of the workbench robots 20 may be provided.

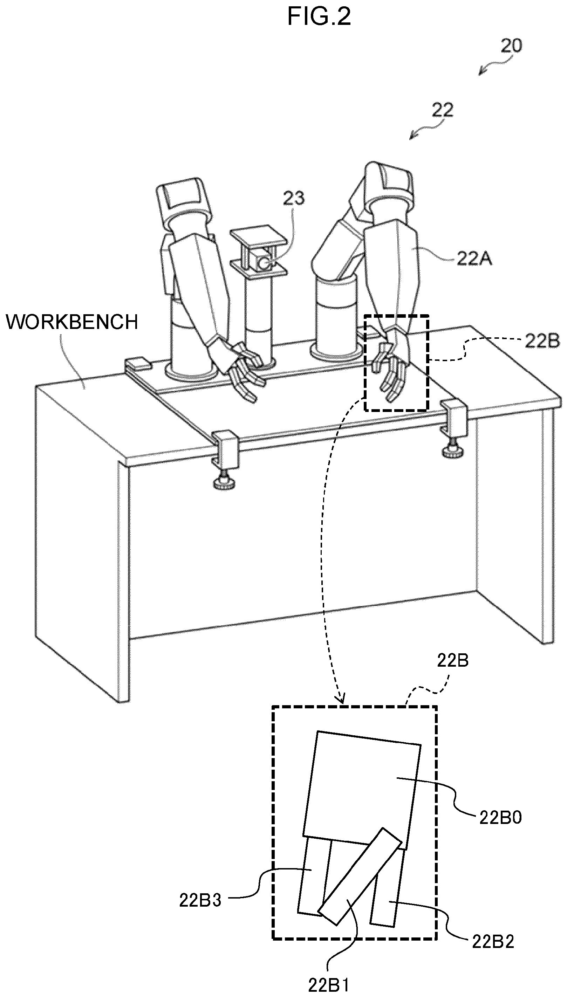

The workbench robot 20 is fixed relative to the workbench and includes a local controller 21 and a gripping mechanism for gripping an object on the workbench. Gripping target objects by the workbench robot 20 are various instruments and the like used in experiments, for example, containers, spatulas, and pipettes. Fig. 2 is an external perspective view of the workbench robot 20. As illustrated in Fig. 2, the workbench robot 20 includes two manipulators 22 and a vision sensor 23.

The manipulator 22 is an example of the gripping mechanism, and includes an arm 22A and a hand 22B attached to a distal end of the arm 22A. The arm 22A may be a vertical articulated arm having a configuration for displacing the position and posture of the hand 22B in, for example, 6 degrees of freedom in a three-dimensional space. The hand 22B is, for example, a 3-finger robot hand capable of gripping a container or the like, in which each finger has a joint.

A schematic enlarged view of the hand 22B is illustrated in the lower part of Fig. 2. In this schematic view, the joints of the respective fingers of the hand 22B are not illustrated, and the shape and arrangement of the respective fingers are illustrated in a simplified manner. The hand 22B includes a first group of fingers including a first finger 22B 1, a second group of fingers including a second finger 22B2 and a third finger 22B3, and a hand body 22B0 to which bases of the first finger 22B1, the second finger 22B2, and the third finger 22B3 are connected. The hand 22B has a structure in which the first group and the second group face each other and an object therebetween can be gripped. As correspondence with the finger of a person, the first finger 22B1 corresponds to a thumb, the second finger 22B2 corresponds to an index finger, and the third finger 22B3 corresponds to a middle finger. The hand 22B may be a robot hand with 4 or more fingers. That is, the first group may include fingers other than the first finger 22B 1, and the second group may include fingers other than the second finger 22B2 and the third finger 22B3. Preferably, each finger of the hand 22B has two joints in the middle. As a result, it is possible to perform stable gripping to wrap around the outer shape of an object, and it is also easy to perform a delicate operation such as pressing a button of an experimental tool.

Hereinafter, in a case in which the two manipulators 22 are described with being distinguished between the left hand and the right hand, the left hand is referred to as a first manipulator 22L, and the right hand is referred to as a second manipulator 22R. In a case in which the hand 22B is described to be distinguished by the left hand and the right hand, the left hand is referred to as a hand 22BL, and the right hand is referred to as a hand 22BR. Similarly, for the finger of the hand 22B, the finger of the hand 22BL of the left hand is referred to as a first finger 22B1L, a second finger 22B2L, and a third finger 22B3L, and the finger of the hand 22BR of the right hand is referred to as a first finger 22B1R, a second finger 22B2R, and a third finger 22B3R. Similarly, the hand body 22B0 is denoted as a hand body 22B0L of the left hand and a hand body 22B0R of the right hand.

The vision sensor 23 is mounted on a pan-tilt table and is a sensor for recognizing a gripping target object such as a container disposed on the workbench.

The local controller 21 controls the operation of each motor of the workbench robot 20 so that the instruction of the centralized controller 30 can be realized. Specifically, the local controller 21 controls the operation of the workbench robot 20 based on a recognition result output from the vision sensor 23, an instruction from the centralized controller 30, and the like. More specifically, the local controller 21 controls the operation of the workbench robot 20 so that the two manipulators 22 cooperate to perform a chemical experiment or an experiment of handling a biological sample. For example, the local controller 21 controls the operation of the workbench robot 20 so that one manipulator 22 grips a spatula and executes a weighing process. The weighing process is a process of scooping and transferring a powdery material, a particle, or a viscous material as a weighing target in an original container to a transfer destination container by using a spatula, measuring the weight of the material in the transfer destination container by using a scale, and acquiring a measurement result.

Although Fig. 2 illustrates an example in which the workbench robot 20 is directly fixed to the workbench, the workbench robot 20 only needs to be fixed to a floor, a wall, a ceiling, or the like as long as the relative positional relationship with the workbench is fixed.

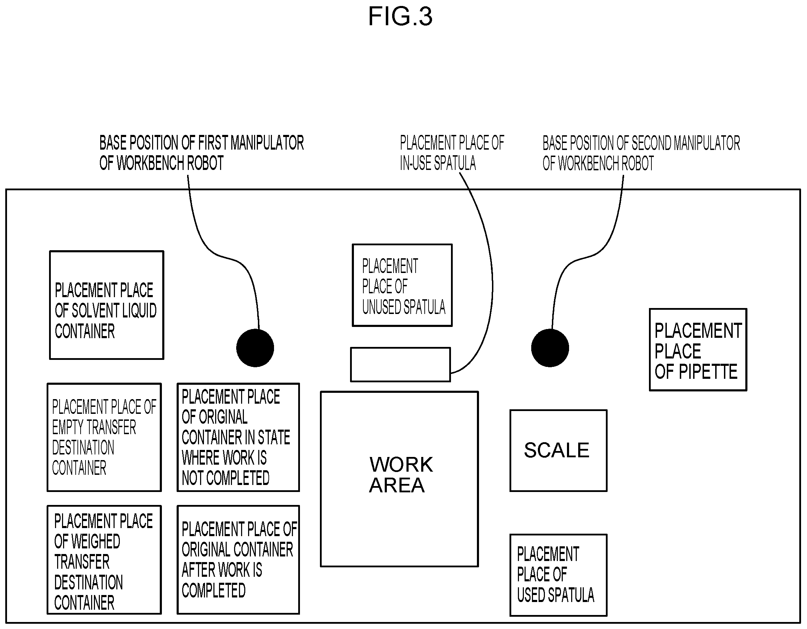

Fig. 3 schematically illustrates an example of arrangement of experimental tools and the like on a workbench on which work by the workbench robot 20 is performed. As illustrated in Fig. 3, various placement places such as an original container for which work has not ended, an original container after work has ended, an unused spatula, an in-use spatula, a used spatula, an empty transfer destination container, a weighed transfer destination container, a solvent liquid container, and a pipette, a work area, a scale, and the like are provided on the workbench. The positions of the various placement places do not need to be fixed on the workbench, and may be flexibly changed in accordance with the content of work or the progress of work.

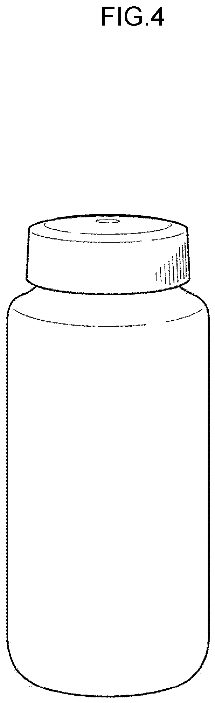

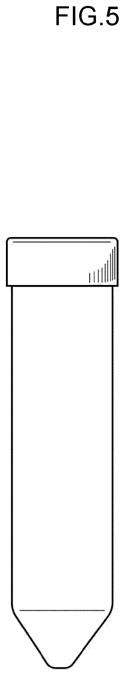

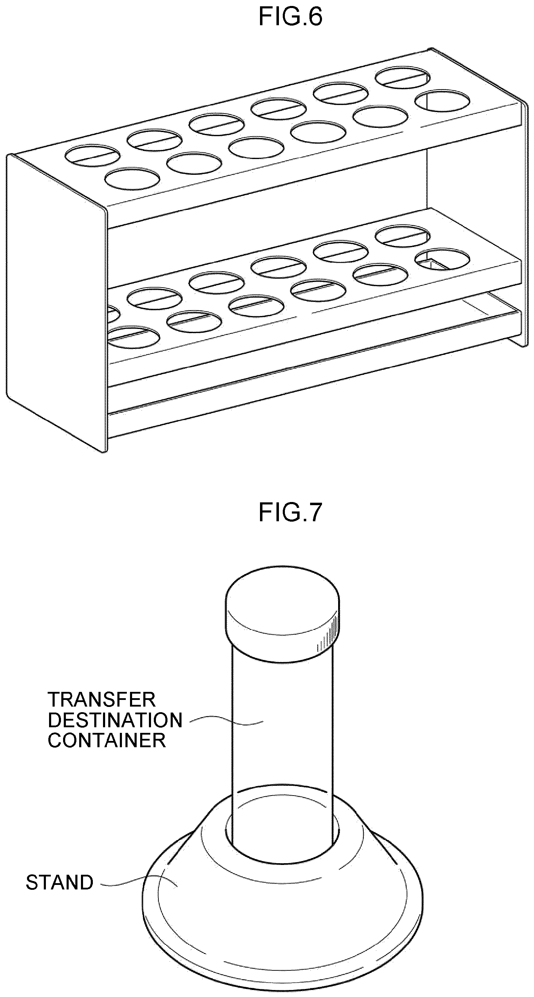

The original container is, for example, a bottle as illustrated in Fig. 4. As an example, the transfer destination container is a conical tube as illustrated in Fig. 5. The transfer destination container is installed in a container rack as illustrated in Fig. 6 installed in each place at a placement place of an empty transfer destination container and at a placement place of a weighed transfer destination container. The empty (unused) transfer destination container and the weighed transfer destination container are desirably installed in different container racks. As illustrated in Fig. 7, the transfer destination container is installed in a standing state on a stand in the work area.

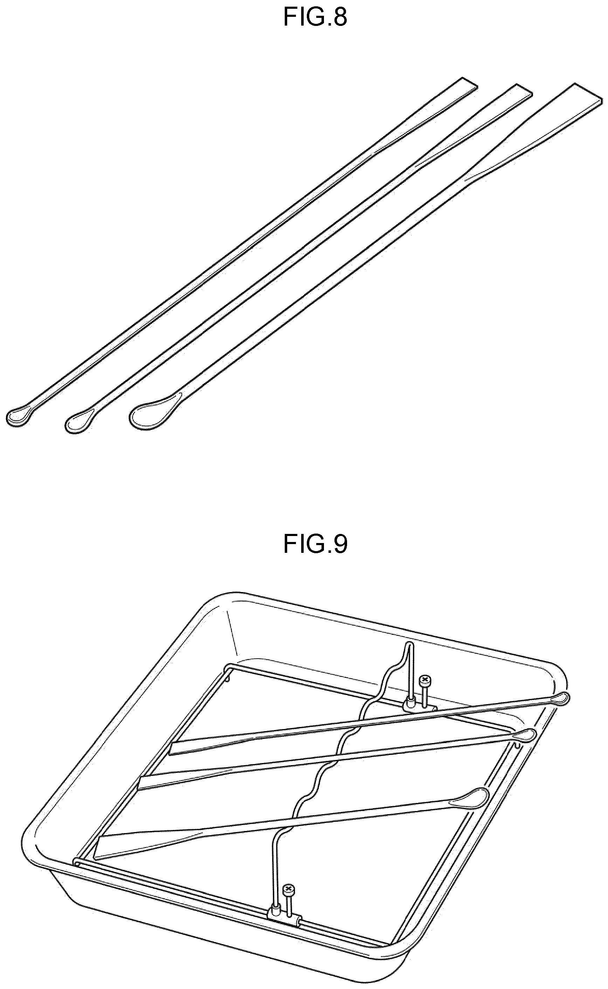

As illustrated in Fig. 8, for example, the spatula includes a spoon part and a handle part having various shapes and sizes such as flat, round, fine and rounded, and thick and rounded. As illustrated in Fig. 9, in a placement place of an unused spatula, a placement place of an in-use spatula, and a placement place of a used spatula, the spatula is disposed on a spatula rack including a tray and a stand installed at each placement place. By using such a spatula rack, the spoon part is floated and kept clean, and the handle part is also floated, so that the workbench robot 20 can easily grip the spatula.

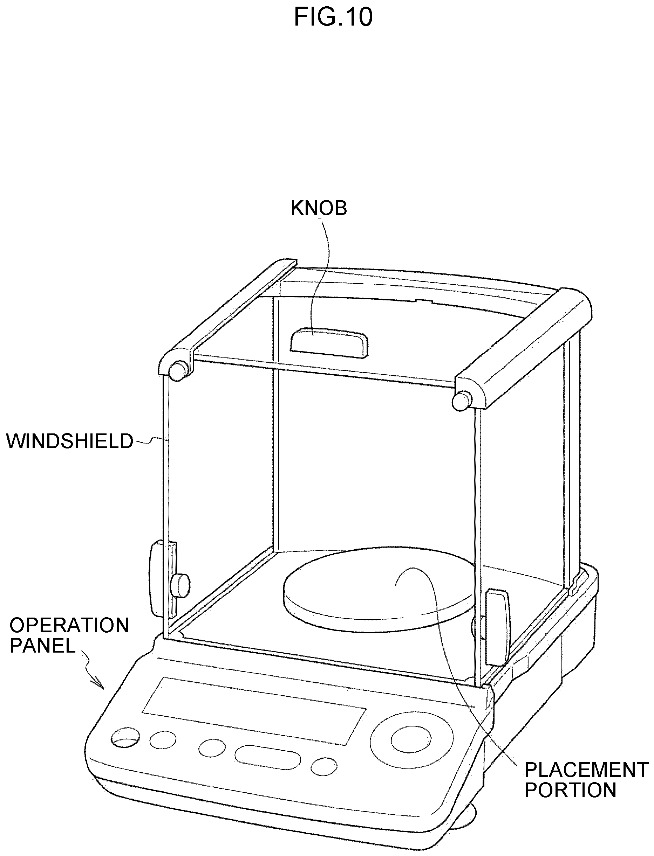

The scale is, for example, an electronic scale as illustrated in Fig. 10. In the example of Fig. 10, the scale includes a placement portion on which a measurement target object is placed, a windshield, and an operation panel including a display portion on which the measurement result of the weight is displayed. The windshield prevents disturbance of a measurement value due to an air flow in order to perform weight measurement with high accuracy, and surrounds four peripheral surfaces of the placement portion and a ceiling surface. Knobs are attached to left and right surfaces of the windshield and the ceiling surface, and the surfaces to which the knobs are attached are opened by pulling the knobs.

The centralized controller 30 controls the operation of each of the workbench robots 20 via the local controller 21 of the workbench robot 20. The gripping operation by the workbench robot 20, the operation on the experimental facility, and the like are realized by the local controller 21 causing the workbench robot 20 to execute an operation plan taught in advance based on the recognition result output from the vision sensor 23.

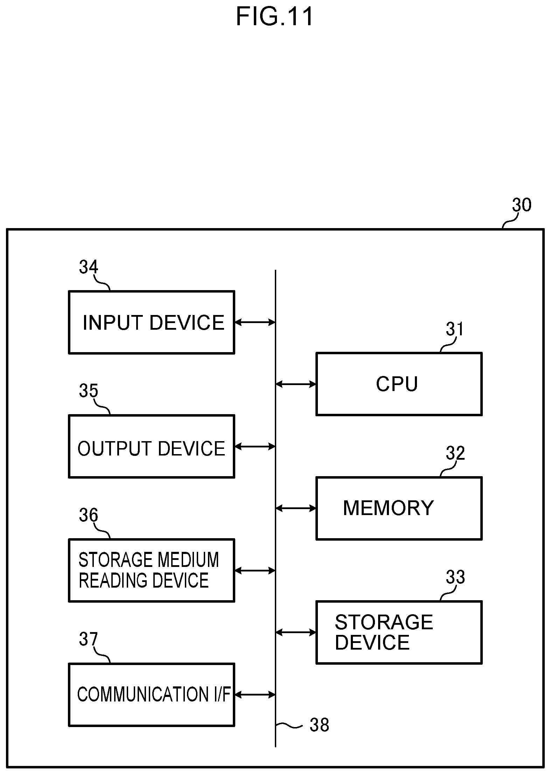

Fig. 11 is a block diagram illustrating a hardware configuration of the centralized controller 30. As illustrated in Fig. 11, the centralized controller 30 includes a central processing unit (CPU) 31, a memory 32, a storage device 33, an input device 34, an output device 35, a storage medium reading device 36, and a communication interface (I/F) 37. The respective components are communicatively connected to each other via a bus 38.

The storage device 33 stores a program for performing control processing which will be described later. The CPU 31 is a central processing unit, and executes various programs and controls each configuration. That is, the CPU 31 reads the program from the storage device 33 and executes the program by using the memory 32 as a work area. The CPU 31 performs control of each configuration and various types of arithmetic processing in accordance with the program stored in the storage device 33.

The memory 32 includes a random access memory (RAM) and temporarily stores programs and data as a work area. The storage device 33 includes a read only memory (ROM), a hard disk drive (HDD), a solid state drive (SSD), or the like, and stores various programs including an operating system and various types of data.

The input device 34 is a device that performs various inputs, such as a keyboard and a mouse. The output device 35 is, for example, a device that outputs various types of information, such as a display and a printer. A touch panel display may be adopted as the output device 35 and function as the input device 34.

The storage medium reading device 36 reads data stored in various storage media such as a compact disc (CD)-ROM, a digital versatile disc (DVD)-ROM, a Blu-ray disc, and a universal serial bus (USB) memory, writes data to the storage medium, and the like. The communication I/F 37 is an interface for communicating with other devices, and for example, standards such as Ethernet (registered trademark), FDDI, or Wi-Fi (registered trademark) are used. The other devices include the local controller 21 of the workbench robot 20, the scale, and the like. In the present embodiment, it is assumed that these other devices also have a communication function.

The hardware configuration of the local controller 21 of the workbench robot 20 is substantially similar to the hardware configuration of the centralized controller 30, and thus the description thereof will be omitted.

Next, the operation of the robot system 100 according to the first embodiment will be described.

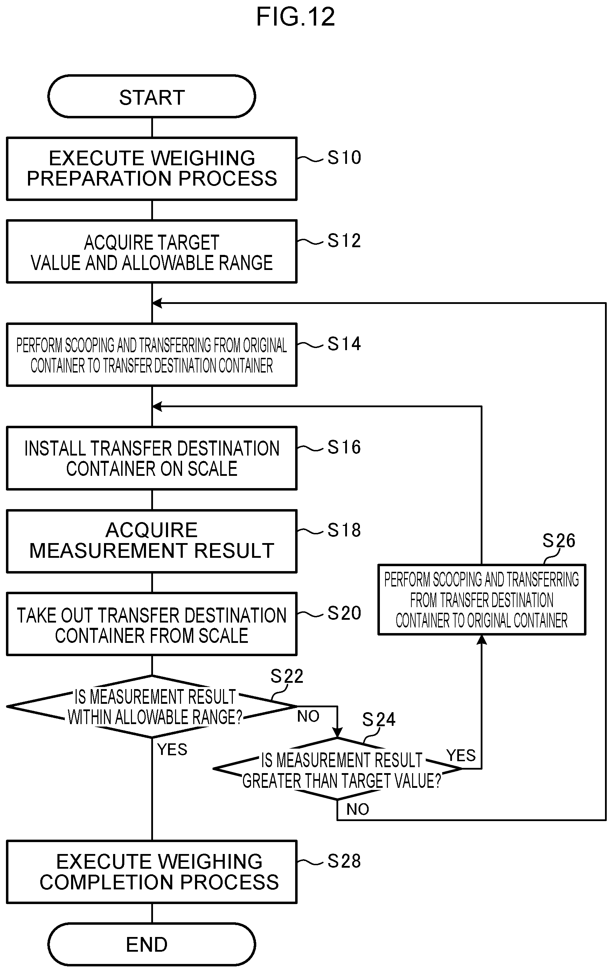

Fig. 12 is a flowchart illustrating a flow of control processing performed by the CPU 31 of the centralized controller 30.

In Step S10, the centralized controller 30 instructs the local controller 21 to execute a weighing preparation process. Upon receiving the instruction, the local controller 21 causes the workbench robot 20 to execute the weighing preparation process. Specifically, the local controller 21 causes the workbench robot 20 to open the windshield by pinching the windshield knob of the scale. In addition, the local controller 21 causes the workbench robot 20 to take out the transfer destination container from the container rack which is the placement place of the empty transfer destination container and grip the transfer destination container. In a case in which a plurality of transfer destination containers are collectively moved on the workbench, the local controller 21 causes the workbench robot 20 to grip the container rack with the hand 22B and move the container rack in units of racks. The local controller 21 causes the workbench robot 20 to open the lid of the transfer destination container and place the lid on the workbench. In addition, the local controller 21 causes the workbench robot 20 to insert an empty transfer destination container into a stand installed on a placement portion of the scale. The stand is normally mounted on a placement portion of the scale separately from the stand used in the work area as illustrated in Fig. 7.

The local controller 21 sets the measurement result displayed on the display portion of the operation panel to 0 by causing the workbench robot 20 to close the windshield of the scale and to press a reset button on the operation panel of the scale. That is, setting is performed such that the weights of the transfer destination container and the stand are subtracted from the total weight measured with the scale, and only the weight of the material in the transfer destination container is measured. In the case of a scale that does not have a reset function or the like, the centralized controller 30 may acquire and store the weights of the transfer destination container and the stand, and subtract the weights of the transfer destination container and the stand from the measurement result at the time of measuring the actual weight of the material.

Means for acquiring the measurement result by the scale may be means for acquiring the measurement result displayed on the scale by photographing the measurement result with a camera, or may be means for acquiring a signal representing the measurement result output from the scale. The vision sensor 23 may be used as the camera. The camera may be provided on the hand 22B or the like of the workbench robot 20, or may be provided on the workbench or the scale. The local controller 21 causes the workbench robot 20 to open the windshield of the scale, remove the transfer destination container from the stand of the placement portion, and stand the transfer destination container on the stand on the workbench. In addition, the local controller 21 causes the workbench robot 20 to open the lid and place the lid on the workbench in a case in which the lid of the original container is closed.

Then, in Step S12, the centralized controller 30 acquires a target value and an allowable range of the weight of the material in the transfer destination container. Means for acquiring the target value and the allowable range may be means for performing acquisition from stored contents such as a database stored in the centralized controller 30 or in a storage device connected to the centralized controller 30. In addition, means for performing acquisition from a human-machine interface device such as a keyboard operated by a person, means for performing acquisition from a communication destination via communication, or the like, which is connected to the centralized controller 30, may be used. The allowable range may be calculated by the centralized controller 30 itself from the acquired target value. For example, regardless of the magnitude of a specific target value, the allowable range may be obtained by multiplying the target value by a prescribed magnification. For example, the allowable range may be a range from the target value × 0.95 to the target value × 1.05. In addition, the allowable range may be obtained to have a prescribed range width including the target value. For example, the allowable range may be a range from the target value -1 mg to the target value +1 mg. Calculating the allowable range from the target value is also one form of acquiring the allowable range. In addition, the centralized controller 30 may acquire the allowable range specified in advance and calculate the target value from the allowable range. For example, the center value of the allowable range may be set as the target value. Calculating the target value from the allowable range is also one form of acquiring the target value.

Then, in Step S14, the centralized controller 30 instructs the local controller 21 to perform scooping and transferring from the original container to the transfer destination container. Upon receiving the instruction, the local controller 21 causes the workbench robot 20 to perform scooping and transferring. Specifically, the local controller 21 causes the first manipulator 22L of the workbench robot 20 to grip the original container, and causes the second manipulator 22R to take out and grip a spatula from the spatula rack.

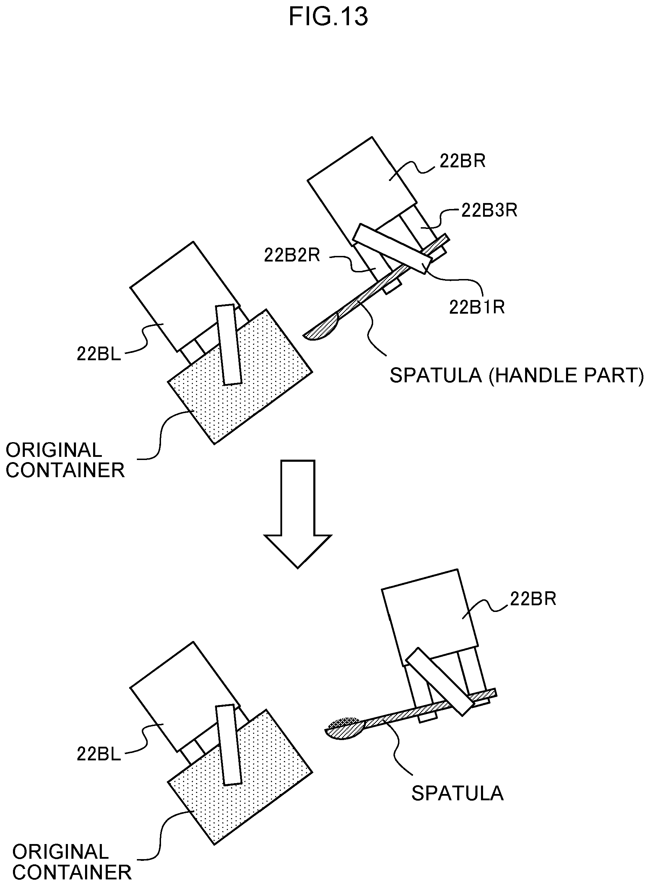

More specifically, as illustrated in Fig. 13, the local controller 21 causes the gripping of the handle part of the spatula between the first group (first finger 22B1R) and the second group (second finger 22B2R and third finger 22B3R) such that both of the second finger 22B2R and the third finger 22B3R come in contact with the handle part of the spatula. As a result, it is possible to stably grip the spatula as compared with the case of gripping the spatula with only two fingers. In a case in which the spatula is gripped with only two fingers, in a case in which an external force is applied to the distal end (scoop part) of the spatula, the spatula easily causes sliding rotation with the gripped part as a fulcrum. As described above, by gripping the spatula with three fingers, it is easy to maintain the gripping posture of the spatula even in a case in which an external force is applied to the spatula.

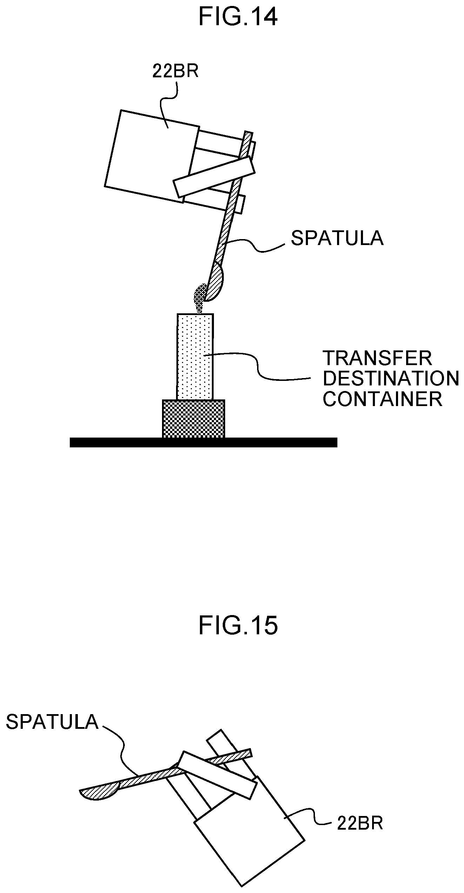

As illustrated in Fig. 13, the local controller 21 causes the workbench robot 20 to put a spatula into the original container and scoop up the material in the original container. As illustrated in Fig. 14, the local controller 21 causes the workbench robot 20 to drop the scooped material into the transfer destination container set and fixed on the stand.

Figs. 13 and 14 illustrate an example in which the spatula is gripped with the hand 22B to hold the spatula from above. In addition, as illustrated in Fig. 15, the spatula may be gripped in a state such as a case in which a person holds a pen. In a case in which the transfer destination container is not fixed to the stand or the like, the hand 22BL may be regripped from the original container to the transfer destination container. The hand body 22B0 may also be brought into contact with the handle part of the spatula to grip the spatula. In a case in which the handle part of the spatula has a plate shape, a flat part (front surface and back surface) of the handle part may be gripped, or a side surface part of the handle may be gripped. For example, a lightweight gripping target object such as a spatula may be gripped with two fingers of the first finger 22B1 and the second finger 22B2 or two fingers of the first finger 22B 1 and the third finger 22B3.

The local controller 21 may cause the first manipulator 22L to grip the original container in an inclined posture. In a case in which it is not possible to incline and grip the original container, it is not possible to reduce the inclination of the spatula, and thus it is not possible to place the material on the spatula. Therefore, in a case in which the original container is not a shallow dish-shaped container with a large opening, scooping becomes difficult. In the present embodiment, even though the original container is a cylindrical container having a narrow opening, by inclining the original container, the spatula can be brought into a posture with a small inclination, that is, a posture closer to horizontal, and the scooping of the material in the original container becomes easy.

The above scooping and transferring operation may be continuously performed a plurality of times. The local controller 21 causes the workbench robot 20 to bring the spatula back to the spatula rack and place the original container on the workbench.

Then, in Step S16, the centralized controller 30 instructs the local controller 21 to install the transfer destination container on the scale. Upon receiving the instruction, the local controller 21 causes the workbench robot 20 to install the transfer destination container on the scale. Specifically, the local controller 21 causes the workbench robot 20 to open the windshield of the scale, grip the transfer destination container on the workbench, insert the transfer destination container into the stand on the placement portion of the scale, and close the windshield of the scale.

Then, in Step S18, the centralized controller 30 acquires a measurement result. Specifically, the centralized controller 30 acquires the measurement result by the means for acquiring the measurement result described in Step S10. In a case in which the weights of the transfer destination container and the stand have already been subtracted from the measurement result in Step S10, the centralized controller 30 acquires the acquired measurement result as the measurement result of the weight of the material in the transfer destination container. In a case in which the subtraction process is not executed in Step S10, the centralized controller 30 subtracts the weights of the transfer destination container and the stand stored in Step S10 from the acquired measurement result to acquire the measurement result of the weight of the material in the transfer destination container.

Then, in Step S20, the centralized controller 30 instructs the local controller 21 to take out the transfer destination container from the scale. Upon receiving the instruction, the local controller 21 causes the workbench robot 20 to take out the transfer destination container from the scale. Specifically, the local controller 21 causes the workbench robot 20 to open the windshield of the scale, grip the transfer destination container on the placement portion of the scale, insert the transfer destination container into a stand on the workbench, and close the windshield of the scale.

Then, in Step S22, the centralized controller 30 determines whether or not the measurement result of the weight of the material in the transfer destination container acquired in Step S18 is within the allowable range acquired in Step S12. In a case of being within the allowable range, the process proceeds to Step S28, and in a case of exceeding the allowable range, the process proceeds to Step S24. In Step S24, the centralized controller 30 determines whether or not the measurement result exceeds the allowable range and is greater than the target value. In a case in which the measurement result exceeds the allowable range and is greater than the target value, the process proceeds to Step S26, and in a case in which the measurement result exceeds the allowable range and is smaller than the target value, the process returns to Step S14.

In Step S26, the centralized controller 30 instructs the local controller 21 to perform scooping and transferring from the transfer destination to the original container. Upon receiving the instruction, the local controller 21 causes the workbench robot 20 to perform scooping and transferring from the transfer destination to the original container. Specifically, the local controller 21 causes the workbench robot 20 to grip the transfer destination container and to take out and grip the spatula from the spatula rack. The local controller 21 causes the workbench robot 20 to insert the distal end (spoon part) of the spatula from the mouth of the transfer destination container to scoop the material and put the material into the original container. The scooping and transferring operation may be continuously performed a plurality of times. The local controller 21 causes the workbench robot 20 to bring the spatula back to the spatula rack and insert the transfer destination container into the stand on the workbench. Then, the process returns to Step S16.

In Step S28, the centralized controller 30 instructs the local controller 21 to execute a weighing completion process. Upon receiving the instruction, the local controller 21 causes the workbench robot 20 to execute the weighing completion process. Specifically, the local controller 21 causes the workbench robot 20 to close the lid of the transfer destination container and insert the transfer destination container into a container rack installed in a placement place of the weighed transfer destination container, on the workbench. The local controller 21 causes the workbench robot 20 to close the lid of the original container, and the control processing ends.

As described above, the robot system according to the first embodiment causes the workbench robot to grip a spatula and execute the weighing process. The weighing process is a process of performing an operation of scooping and transferring a powdery material, a particle, or a viscous material as a weighing target in an original container to a transfer destination container by using a spatula, measuring the weight of the material in the transfer destination container by using a scale, and acquiring a measurement result. As a result, it is possible to automate weighing of a material that is a powder, a particle, or a viscous material from an original container to a transfer destination container using a spatula, and acquire a weight of the material transferred to the transfer destination container with accuracy that is usable in a scene of a chemical experiment or an experiment of handling a biological sample.

In a case in which the measurement result of the weight of the material in the transfer destination container exceeds the allowable range and is smaller than the target value, the robot system according to the first embodiment repeats scooping and transferring from the original container to the transfer destination container (forward direction). As a result, it is easy to make the measurement result within an allowable range.

In addition, in a case in which the measurement result of the weight of the material in the transfer destination container exceeds the allowable range and is greater than the target value, the robot system according to the first embodiment performs scooping and transferring from the transfer destination container to the original container (reverse direction). As a result, it becomes easier to make the measurement result within the allowable range, and by bringing the material exceeding the target value back to the original container, the material is not wastefully discarded.

In the first embodiment, the case in which the weight of the material in the transfer destination container is within the allowable range centered on the target value has been described, but this is not essential. For example, it may be sufficient that a weight range of the material in the transfer destination container is naturally within a certain range by performing the scooping and transferring operation a predetermined number of times, and then a highly accurate measurement value of the actual weight of the material can be obtained. In such a case, after the process of Step S20, the process may proceed to Step S28 without executing the processes of Steps S22 and S24.

In the first embodiment, a plurality of transfer destination containers may be used for scooping and transferring a material from one original container. That is, a plurality of transfer destination containers may be used in the weighing process for one type of material. In this case, the weights of the materials contained in the plurality of transfer destination containers may be substantially the same or different from each other. In a case in which there is a target value, the target values may be different from each other.

At the time of the scooping and transferring operation in Steps S14 and S26, a spatula to be used may be selected from a plurality of spatulas having different sizes and shapes of spoon parts in accordance with a material to be scooped and transferred, sizes of opening portions of the original container and the transfer destination container, target values, and the like. In addition, depending on the magnitude of the difference between the measurement result and the target value or the magnitude of the difference between the estimated value of the weight of the material in the transfer destination container and the target value, a smaller spatula may be selected as the difference becomes smaller. As a result, it is easy to bring the measurement result close to the target value.

In the case of scooping and transferring in the forward direction, the estimated value of the weight of the material in the transfer destination container can be obtained, for example, by assuming the amount of the material to be scooped and transferred in one scooping and transferring operation and multiplying the assumed amount by the number of scooping and transferring operations up to the present. Depending on the size of the used spatula, the assumed value of the amount of material to be scooped and transferred in one scooping and transferring operation may be changed. Similarly, in the case of scooping and transferring in the reverse direction, scooping and transferring may be performed assuming the amount of the material to be scooped and transferred in one scooping and transferring operation. Even in the case of estimating the weight of the material in the transfer destination container, it is preferable to acquire the measurement result of the weight of the material in the transfer destination container by using a scale once the forward scooping transfer is ended. Thereafter, it is preferable to perform the scooping and transferring operation in the forward or reverse direction if necessary. In this manner, by obtaining the measurement result in a state estimated to be close to the target value in the middle of scooping and transferring, instead of proceeding with scooping and transferring based only on the estimated value, the measurement result is more likely to be within the allowable range later.

In the scooping and transferring operation in the reverse direction, it is preferable to reduce the amount of material to be scooped and transferred in one scooping and transferring operation. Therefore, in scooping and transferring in the reverse direction, a smaller spatula may be used, or the amount of the material to be placed on the spatula may be reduced by reducing the depth of insertion of the spatula into the material pool without changing the size of the spatula.

Further, in the robot system according to the first embodiment, the workbench robot may be caused to perform the scooping and transferring operation in a state in which the transfer destination container is not placed on the scale, and place the transfer destination container on the scale for measurement. In this case, even though a part of the material spills around the transfer destination container, the spilled material does not become a measurement target by the scale, so that the weight of the spilled material does not become an error.

The scale used in the robot system according to the first embodiment may be used as a scale for main measurement, and another scale for provisional measurement may be used separately from the scale. In this case, the workbench robot is caused to perform the scooping and transferring operation in a state in which the transfer destination container is placed on another scale, measure the weight of the material in the transfer destination container by using the other scale, and acquire the measurement result by the other scale. In a case in which the measurement result by another scale is within a predetermined range including the target value, the weight of the material in the transfer destination container may be measured by placing the transfer destination container on the scale for main measurement. It takes time to repeat the operation of placing the transfer destination container on the scale for main measurement during scooping and transferring, measuring the current weight of the material, and then lowering the transfer destination container from the scale in order to continue the scooping and transferring. Compared to this case, by performing the scooping and transferring operation while placing the transfer destination container on another scale, it is possible to efficiently measure a change in weight of the material in the transfer destination container. Furthermore, even though there is a spilled material that does not enter into the transfer destination container, this does not cause an error in the measurement result by the scale for the main measurement.

The width of "predetermined range" including the target value is preferably slightly greater than the amount to be scooped and transferred in one scooping and transferring operation. In this manner, it is possible to reliably make the measurement result by another scale within the predetermined range while repeating the scooping and transferring operation. If the gripping is changed to a smaller spatula as the measurement result by another scale approaches the target value, the width of "predetermined range" that is slightly greater than the amount to be scooped and transferred in one scooping and transferring operation by the minimum spatula can be set. Thus, it is possible to realize a state in which the amount of the material in the transfer destination container is considerably close to the target value before using the scale for main measurement which takes time for a series of measurement operations. Further, as another scale for provisional measurement, a scale without a windshield may be used. In this case, it is possible to reduce the time required to open and close the windshield.

In a case in which another scale is used, in a weighing preparation process in Step S10 in the control processing, in addition to the process in Step S10 described above, the workbench robot is caused to grip the transfer destination container and insert an empty transfer destination container into a stand on a placement portion of another scale. The stand is normally mounted on a mounting portion of another scale. In addition, the workbench robot is caused to use a reset function of pressing a reset button of another scale to zero the display of the other scale, that is, to subtract the weights of the transfer destination container and the stand.

In scooping and transferring in Step S14 in the first pass of the control processing, the workbench robot is caused to grip the original container, to take out the spatula from the spatula rack and grip the spatula, to insert the distal end of the spatula from the mouth of the original container, and to scoop the material. In addition, the workbench robot is caused to repeat the operation of putting the material into the transfer destination container erected on the stand on the placement portion of the other scale and scooping and transferring so that the measurement result by the other scale falls within a predetermined range. The workbench robot is caused to bring the spatula back to the spatula rack, place the original container on the workbench, remove the transfer destination container from the stand of another scale, and stand the transfer destination container on the stand on the workbench. In Step S14 from the second pass, the process returns to the process of the first embodiment, and no other scale is used.

In the first embodiment, in a case in which the first original container and the second original container containing the same type of material are prepared as the original container, the original container may be relayed from the first original container to the second original container to scoop the material. This is a scooping and transferring operation performed in a case in which the weight of the material in the transfer destination container cannot reach the allowable range only by the scooping and transferring operation from the first original container to the transfer destination container due to a small remaining amount of the material in the first original container. Specifically, after the scooping and transferring operation from the first original container to the transfer destination container, the workbench robot is caused to perform the scooping and transferring operation from the second original container to the transfer destination container.

More specifically, the workbench robot sets the initial original container as the first original container, and is caused to perform scooping and transferring from the first original container to the transfer destination container. In a case in which it is determined that the remaining amount of the first original container has almost run out before the weight of the material in the transfer destination container reaches the allowable range, the workbench robot is caused to open the lid of the second original container and to regrip the gripped first original container to the second original container. Thereafter, the workbench robot is caused to perform scooping and transferring by using the second original container as the original container. The remaining amount of the first original container may be determined based on, for example, whether or not the first original container is sufficiently scooped by observing the top of the spatula after the scooping operation with a vision sensor or the like. In addition, after the gripped first original container is moved to be viewed with the vision sensor, the inside of the first original container may be observed with the vision sensor, and the movement may be performed based on whether or not there is almost no remaining amount. The state to be checked by the vision sensor may be performed by performing pattern matching with a prescribed image defined in advance or using a machine learning model generated in advance. In a case in which the measurement result is within the allowable range, the workbench robot is caused to bring the spatula back to the spatula rack and place the second original container on the workbench.

As a result, even in a case in which a material of an amount less than the target value remains in the original container, the remaining material can be set as a scooping and transferring target, so that it is possible to reduce the amount of the material remaining in the original container and having to be discarded. In particular, in a case in which even a trace amount of an expensive material is set as a target, it is desirable to reduce the waste amount as much as possible. Therefore, it is effective to perform scooping of the material by relaying from the first original container to the second original container. In the case of scooping and transferring in the reverse direction, transferring may be performed from the transfer destination container to the second original container instead of the first container.

### <Second Embodiment>

Next, a second embodiment will be described. In a robot system according to the second embodiment, the same components as those of the robot system 100 according to the first embodiment are denoted by the same reference signs, and a detailed description thereof will be omitted.

As illustrated in Fig. 1, a robot system 200 according to the second embodiment includes a centralized controller 230 instead of the centralized controller 30 of the robot system 100 according to the first embodiment. The centralized controller 230 causes a workbench robot 20 to make a solution of the material in the transfer destination container after the weighing process, in addition to the weighing process illustrated in Fig. 12. Since the hardware configuration of the centralized controller 230 is similar to the hardware configuration of the centralized controller 30 according to the first embodiment, the description thereof will be omitted.

Next, the operation of the robot system 200 according to the second embodiment will be described.

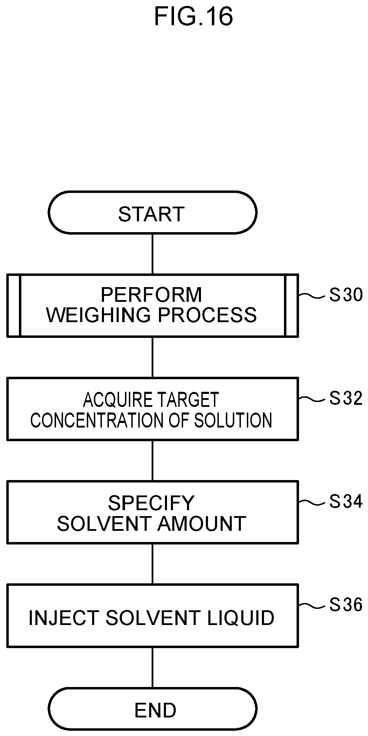

Fig. 16 is a flowchart illustrating a flow of control processing performed by a CPU 31 of the centralized controller 230.

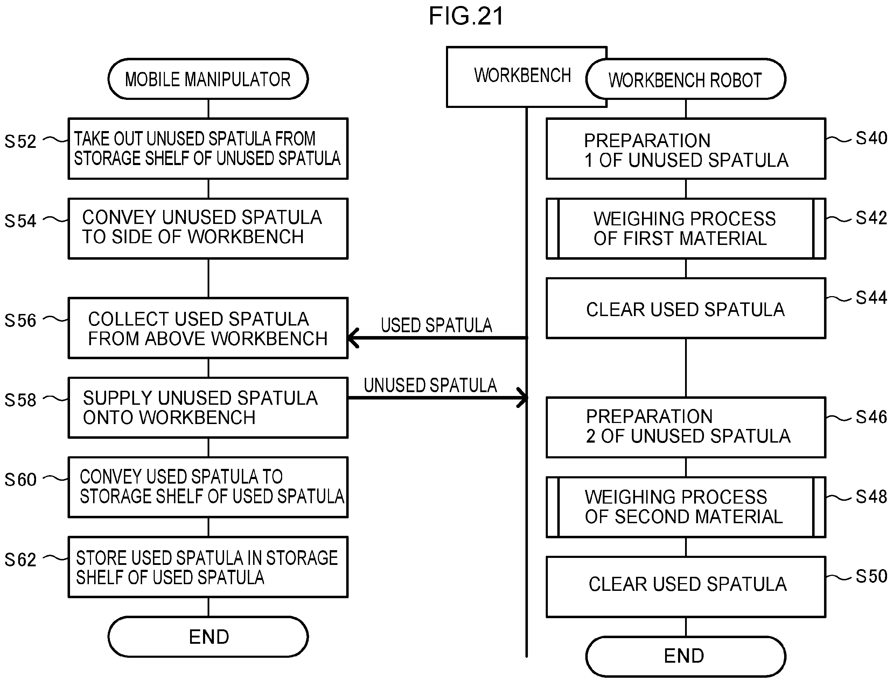

In Step S30, as in the case of the first embodiment, the centralized controller 230 instructs the local controller 21 to execute each step for executing the weighing process illustrated in Fig. 12. Upon receiving the instruction, the local controller 21 causes the workbench robot 20 to execute each step of the weighing process. Regarding the description of the steps of the weighing process in Figs. 21 to 29, there is a case in which the statement of the centralized controller 230 is omitted and the same contents as in Step S30 are expressed as "The local controller 21 causes the workbench robot 20 to execute the weighing process similar to the control processing (Fig. 12) in the first embodiment".

Then, in Step S32, the centralized controller 230 acquires the target concentration of the solution. Means for acquiring the target concentration may be similar to the means for acquiring the target value and the allowable range by the centralized controller 30 in the first embodiment. Then, in Step S34, the centralized controller 230 specifies the solvent amount necessary for bringing the solution to the target concentration based on the measurement result of the weight of the material in the transfer destination container.

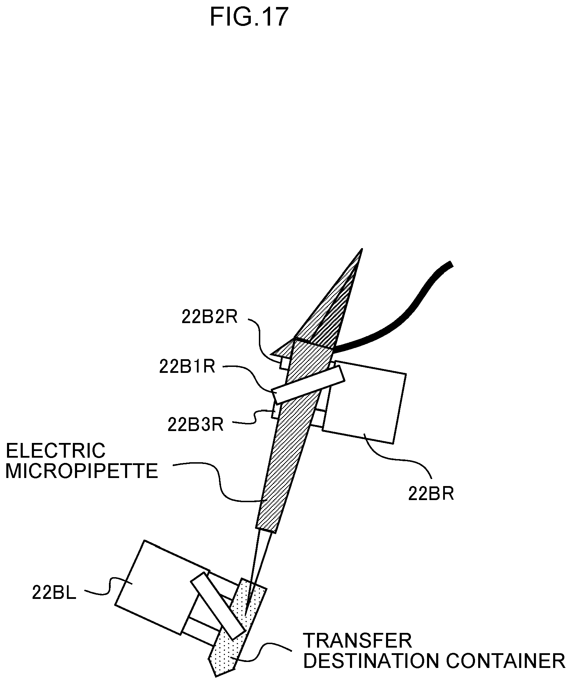

Then, in Step S36, the centralized controller 230 instructs the local controller 21 to inject a solvent liquid. Upon receiving the instruction, the local controller 21 causes the workbench robot 20 to inject the specified amount of solvent liquid into the transfer destination container by using a pipette. For example, the local controller 21 causes the workbench robot 20 to grip an electric micropipette with the hand 22BR and operate the electric micropipette to suck the specified amount of solvent liquid from the solvent liquid container installed in a placement place of the solvent liquid container. As illustrated in Fig. 17, the local controller 21 causes the workbench robot 20 to operate the electric micropipette to discharge the sucked solvent liquid to the transfer destination container.

In a case of causing the workbench robot 20 to grip the electric micropipette, the local controller 21 causes the electric micropipette to be griped between the first group (the first finger 22B1R) and the second group (the second finger 22B2R and the third finger 22B3R) such that both the second finger 22B2R and the third finger 22B3R come into contact with the electric micropipette. As a result, it is possible to stably grip the electric micropipette as compared with the case of gripping the electric micropipette with only two fingers. In a case in which the electric micropipette is gripped with only two fingers, in a case in which an external force is applied to the distal end or the root side (for example, a cable) of the electric micropipette, the electric micropipette easily causes sliding rotation with the gripped portion as a fulcrum. As described above, by gripping the electric micropipette with three fingers, it is easy to maintain the gripping posture of the electric micropipette even in a case in which an external force is applied to the electric micropipette. In addition, the local controller 21 may grip the electric micropipette such that the hand body 22B0 also comes into contact with the electric micropipette. As a result, the gripping posture of the electric micropipette becomes more stable.

As described above, the robot system according to the second embodiment causes the workbench robot to perform the process of making a solution of the material in the transfer destination container by injecting the solvent liquid into the transfer destination container after the weighing process. As a result, it is possible to automate the process up to making a solution after weighing. In addition, after the amount of the solvent that achieves the target concentration is specified, by injecting the specified solvent amount of the solvent liquid into the transfer destination container by using a pipette, it is possible to achieve the concentration of the solution at the target concentration with high accuracy.

### <Third Embodiment>

Next, a third embodiment will be described. In a robot system according to the third embodiment, the same components as those of the robot system 100 according to the first embodiment are denoted by the same reference signs, and a detailed description thereof will be omitted.

A typical example of an experimental environment used by a researcher includes an environment in which a workbench for performing a large part of work is installed and a microscope, a centrifuge, or the like is installed at a place away from the workbench. In a case in which a researcher performs work, while performing the work on the workbench, the researcher walks and moves between the workbench and a microscope or a centrifuge if necessary during the work, carrying a sample container, and uses these devices.

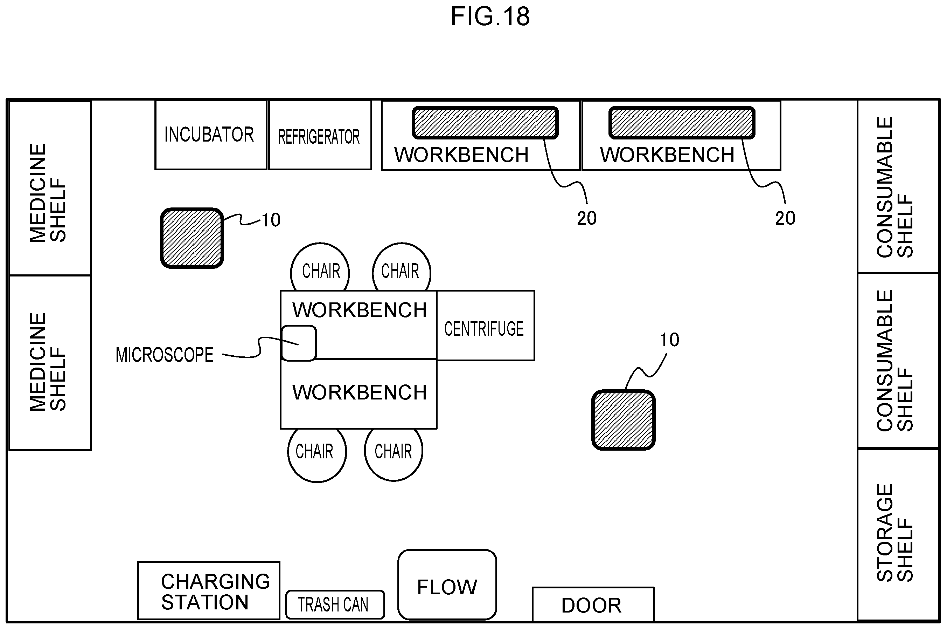

The robot system according to the third embodiment operates in an environment similar to the typical example of the experimental environment used by the researcher. Fig. 18 is a schematic plan view illustrating an example of an experimental environment in which the robot system according to the third embodiment operates. In the example of Fig. 18, in addition to the microscope, the centrifuge, and the workbench described above, experimental facilities such as a medicine shelf, an incubator, a refrigerator, a consumable shelf, a storage shelf, a charging station, a flow, and a chair are included in the experimental environment.

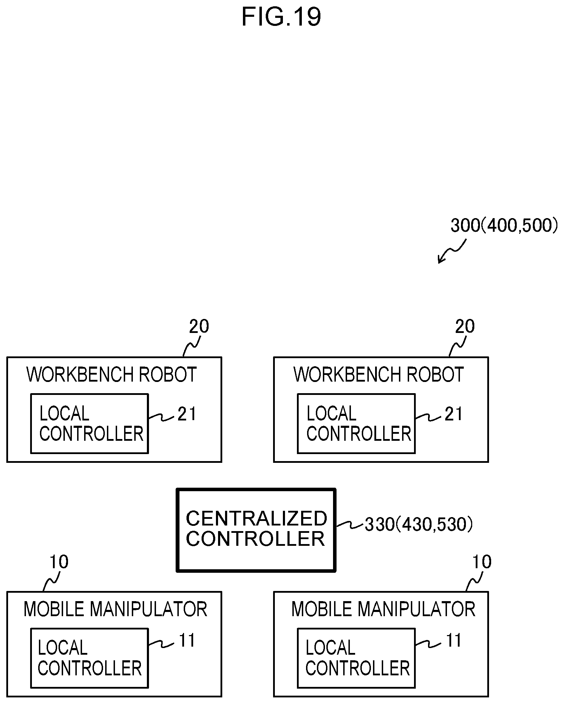

As illustrated in Fig. 19, a robot system 300 according to the third embodiment includes a mobile manipulator 10, a workbench robot 20, and a centralized controller 330. In the example of Fig. 19, the number of mobile manipulators 10 is two, and the number of workbench robots 20 is two, but the disclosure is not limited thereto. Each of the mobile manipulator 10 and the workbench robot 20 may be one or three or more.

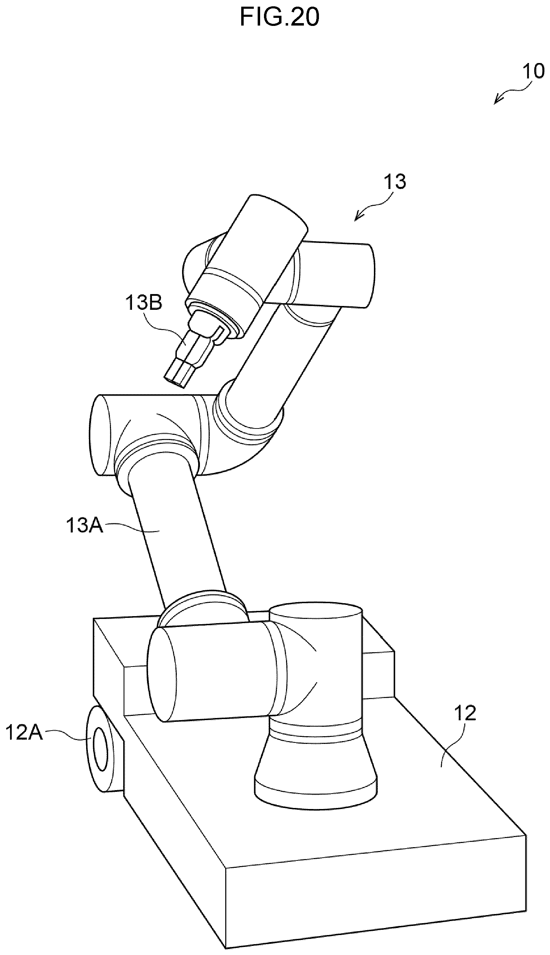

The mobile manipulator 10 includes a local controller 11, a moving mechanism for moving on a floor, and a gripping mechanism for gripping an object. Fig. 20 is an external perspective view of the mobile manipulator 10. As illustrated in Fig. 20, the mobile manipulator 10 includes a carriage 12 and a robot arm 13.

The carriage 12 is an example of the moving mechanism, and has two drive wheels 12A driven under the control of the local controller 11. Further, the carriage 12 has casters that change freely in direction on the front bottom surface in Fig. 20. Since the two drive wheels 12A are driven independently of each other, the carriage 12 can move freely on the floor like the researcher. A drive mechanism is not limited to two independent drive wheels, and may be any mechanism capable of moving on the floor, and is preferably a mechanism with less restriction on the mode of movement including turning. The robot arm 13 is an example of a gripping mechanism, and is mounted on the carriage 12. The robot arm 13 includes an arm 13A and a hand 13B attached to a distal end of the arm 13A. The arm 13A may be a vertical articulated arm having a configuration for displacing the position and posture of the hand 13B in, for example, 6 degrees of freedom in a three-dimensional space. The hand 13B is, for example, a 2-finger robot hand capable of gripping a container or the like. Fig. 20 illustrates an example in which the mobile manipulator 10 includes one robot arm 13, and a dual arm including two robot arms 13 may be used. In a case in which the mobile manipulator 10 conveys a conveyance target object, the conveyance target object may be gripped by the hand 13B, or the conveyance target object may be placed on the carriage 12, for example, a part one step higher than the drive wheel 12A.

The mobile manipulator 10 includes a vision sensor (not illustrated) in a location close to the hand 13B of the arm 13A. The vision sensor is a sensor for recognizing an object around the mobile manipulator 10 and a gripping target object such as a container gripped by the hand 13B. The vision sensor includes a camera and an image processing device, and the image processing device recognizes a surrounding object and a gripping target object by performing image processing on an image captured by the camera. This enables autonomous movement of the mobile manipulator 10. The sensor for recognizing the surrounding object and the gripping target object is not limited to the vision sensor, and a laser radar or the like capable of measuring the three-dimensional position of each point in the periphery may be used. In addition, the sensor for recognizing a surrounding object may be mounted on the carriage 12.

The local controller 11 controls the operation of each motor of the mobile manipulator 10 so that the instruction of the centralized controller 330 can be realized. Specifically, the local controller 11 controls the operation of the mobile manipulator 10 based on a recognition result output from the vision sensor, an instruction from the centralized controller 330, and the like. More specifically, the local controller 11 controls the operation of the mobile manipulator 10 so that the gripping target object such as a container is gripped by the hand 13B and the gripped gripping target object is conveyed to a predetermined position such as a workbench.

The centralized controller 330 controls the operation of each of the mobile manipulator 10 and the workbench robot 20 in cooperation with the local controller 11 of the mobile manipulator 10 and the local controller 21 of the workbench robot 20.

A griping operation by the mobile manipulator 10 and an operation on the experimental facility are realized by the local controller 11 causing the mobile manipulator 10 to perform an operation plan taught in advance based on the recognition result output from the vision sensor.

The movement of the mobile manipulator 10 is realized by the local controller 11 moving the mobile manipulator 10 to the position of the experimental facility instructed by the centralized controller 330 based on the layout diagram of the experimental environment held in advance. The local controller 11 moves the mobile manipulator 10 to move to a target position while avoiding an obstacle based on the recognition result output from the vision sensor.

Next, the operation of the robot system 300 according to the third embodiment will be described.

Fig. 21 is a flowchart illustrating a flow of control processing performed by a CPU 31 of the centralized controller 330. Each step of the flowchart on the right side in Fig. 21 is a control process executed by the local controller 21 of the workbench robot 20 in accordance with an instruction of the centralized controller 330. Furthermore, each step of the flowchart on the left side in Fig. 21 is control processing performed by the local controller 11 of the mobile manipulator 10 in accordance with an instruction of the centralized controller 330. In Fig. 21, the state of a spatula disposed on the workbench is illustrated in association with the flow of the control processing.

First, control processing on the workbench robot 20 side will be described.

In Step S40, the local controller 21 causes the workbench robot 20 to perform preparation 1 of an unused spatula. Specifically, the local controller 21 causes the workbench robot 20 to execute a process of moving a spatula rack containing a spatula from a placement place of an unused spatula on the workbench to a placement place of an in-use spatula. The spatula rack may be, for example, a rack including a tray and a stand as illustrated in Fig. 9, or may be a rack such as a pencil case without a lid. The unused spatula may be any spatula as long as there is no possibility of mixing different materials into the original container at the time of scooping and transferring, and includes a new spatula and a spatula having a usage history but not used after washing.

Then, in Step S42, the local controller 21 causes the workbench robot 20 to execute a weighing process of a first material. The weighing process of the first material is a weighing process including scooping from the original container containing the first material, and specific processing contents are the same as those of the control processing (Fig. 12) in the first embodiment.

Then, in Step S44, the local controller 21 causes the workbench robot 20 to clear the used spatula. Specifically, the local controller 21 causes the workbench robot 20 to execute a process of moving a spatula rack containing a spatula from the placement place of an in-use spatula on the workbench to a placement place of a used spatula.

Then, in Step S46, the local controller 21 causes the workbench robot 20 to perform preparation 2 of an unused spatula. Specifically, the local controller 21 causes the workbench robot 20 to execute a process of moving the spatula rack containing the spatula supplied to the placement place of an unused spatula to the placement place of an in-use spatula by the mobile manipulator 10. The unused spatula may be placed anywhere on the workbench. For example, a placement place of a used spatula may be diverted.

Then, in Step S48, the local controller 21 causes the workbench robot 20 to execute a weighing process of a second material. The weighing process of the second material is a weighing process including scooping from the original container containing the second material, and specific processing contents are the same as those of the control processing (Fig. 12) in the first embodiment. Then, in Step S50, the local controller 21 causes the workbench robot 20 to clear the used spatula, and the control processing on the workbench robot 20 side ends.

Next, control processing on the mobile manipulator 10 side will be described.

In Step S52, the local controller 11 causes the mobile manipulator 10 to take out the spatula rack from a storage shelf in the laboratory where the spatula rack containing an unused spatula is stored. Then, in Step S54, the local controller 11 causes the mobile manipulator 10 to convey the taken-out spatula rack containing an unused spatula to the side of the workbench.

Then, in Step S56, the local controller 11 causes the mobile manipulator 10 to collect the spatula rack containing the used spatula, which is placed on the placement place of the used spatula, by the workbench robot 20 in Step S44. Then, in Step S58, the local controller 11 causes the mobile manipulator 10 to supply the conveyed spatula rack containing the unused spatula to the placement place of an unused spatula on the workbench.

Then, in Step S60, the local controller 11 causes the mobile manipulator 10 to convey the collected spatula rack containing the used spatula to the storage shelf in the laboratory where the spatula rack containing the used spatula is stored. Then, in Step S62, the local controller 11 causes the mobile manipulator 10 to store the conveyed spatula rack containing the used spatula in the storage shelf in which the spatula rack containing the used spatula is stored. The control processing on the mobile manipulator 10 side ends.

As described above, the robot system according to the third embodiment causes the mobile manipulator to collect the used spatula on the workbench. As a result, it is possible to increase the empty place on the workbench. In addition, the robot system according to the third embodiment collects the spatula used for the first material and then supplies an unused spatula used for the second material onto the workbench. As a result, a place for placing a spatula to be used for the second material on the workbench from an early stage is not necessary. In a case in which a plurality of spatulas having different sizes are used for the weighing process of one type of material, the collection and supply are performed in units of a plurality of spatulas, and thus the effect from the viewpoint of effective use of a place on the workbench is increased.

It is assumed that the first original container containing the first material and the second original container containing the second material different from the first material are prepared as the original container. In this case, the robot system according to the third embodiment causes a first spatula to be used in a case in which the weighing process for the first material is executed, and then causes a second spatula, which is an individual different from the first spatula, to be used in a case in which the weighing process for the second material is executed. As a result, it is possible to prevent the first material from being mixed into the original container and the transfer destination container of the second material.

In the third embodiment, it is assumed that the first spatula is used in a manner that the workbench robot moves one spatula rack from a spatula rack stacked in advance in the placement place of an unused spatula on the workbench to the placement place of an in-use spatula. The disclosure is not limited thereto, and the first spatula may also be supplied by the mobile manipulator.

In a case in which the spatula rack is stacked on the workbench, the spatula rack having a stackable shape may be used, or in the case of a spatula rack as illustrated in Fig. 9, a shelf may be installed in the placement place of an unused spatula, and a plurality of spatulas may be stored on the shelf. In addition, a spatula to be used as the second spatula may be taken out from a spatula rack stacked in advance in the placement place of an unused spatula on the workbench. In this case, only the processes on the workbench robot side may be executed without using the mobile manipulator. Even in this case, there is an effect that it is possible to prevent the first material from being mixed into the original container and the transfer destination container of the second material. That is, the prevention of mixing of materials by using different spatulas is not limited to the third embodiment, and can be applied to any embodiment.

In the third embodiment, the mobile manipulator collects the first spatula that has been used first, and then supplies the second spatula onto the workbench. The space for supplying the second spatula may be a space on the workbench that has been vacant by collecting the first spatula, or the mobile manipulator or the workbench robot may move the article on the workbench to change the empty place, if appropriately. If there is room in the space on the workbench, the second spatula may be supplied first, and then the first spatula may be collected. In this case, replacement of the spatula can be performed even though there is no space on the mobile manipulator.

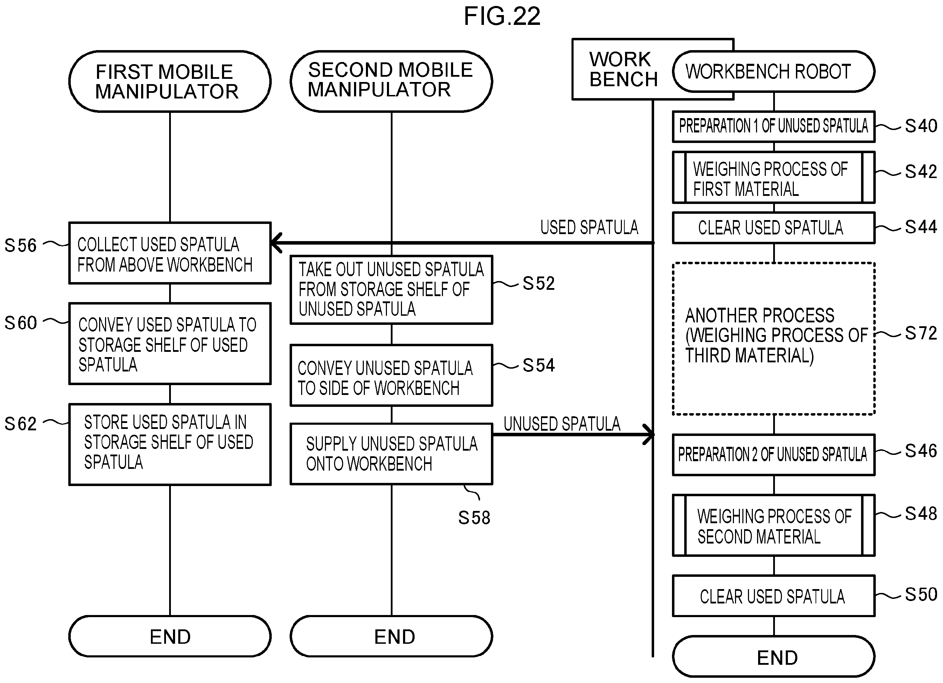

As illustrated in Fig. 22, the first spatula may be collected and conveyed first, and then the second spatula may be conveyed and supplied. The mobile manipulator that handles the first spatula may be different from the mobile manipulator that handles the second spatula. In particular, in a case in which another process such as a weighing process of a third material is executed between the weighing process of the first material and the weighing process of the second material, if a third spatula can be prepared on the workbench, it is acceptable even though it takes time from collection of the first spatula to supply of the second spatula.

### <Fourth Embodiment>

Next, a fourth embodiment will be described. In a robot system according to the fourth embodiment, the same components as those of the robot system 300 according to the third embodiment are denoted by the same reference signs, and a detailed description thereof will be omitted.

As illustrated in Fig. 19, a robot system 400 according to the fourth embodiment includes a mobile manipulator 10, a workbench robot 20, and a centralized controller 430. The centralized controller 430 causes the mobile manipulator 10 to execute a preparatory conveyance process of conveying the original container from the storage location of the original container onto the workbench, and a storage conveyance process of conveying the original container from above the workbench to the storage location after executing the weighing process.

Next, the operation of the robot system 400 according to the fourth embodiment will be described.

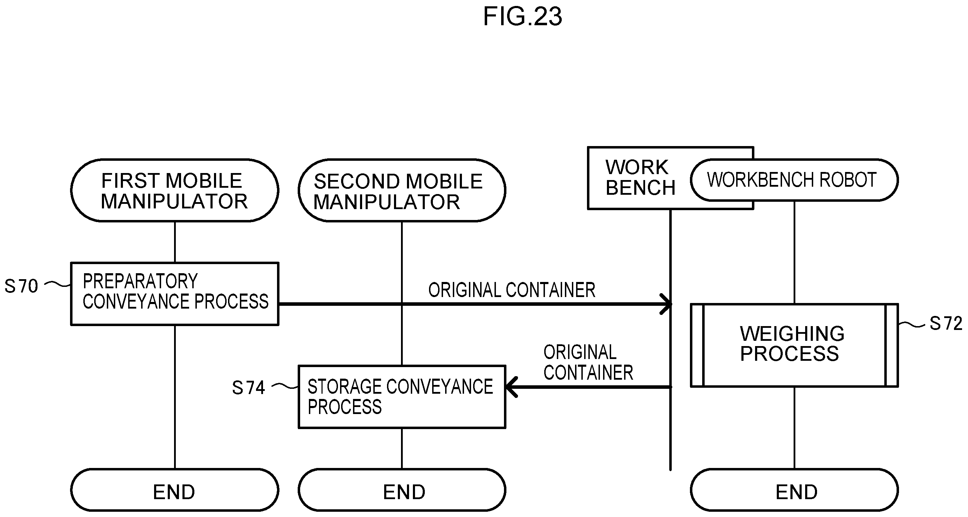

Fig. 23 is a flowchart illustrating a flow of control processing performed by a CPU 31 of the centralized controller 430. Step S72 of the flowchart on the right side in Fig. 23 is control processing performed by a local controller 21 of a workbench robot 20 in accordance with an instruction of the centralized controller 430. Steps S70 and S74 in the second flowchart from the first left and the left in Fig. 23 are control processing performed by the local controller 11 of each of two mobile manipulators 10 (a first mobile manipulator and a second mobile manipulator) in accordance with an instruction of the centralized controller 430. In Fig. 23, the state of an original container disposed on the workbench is illustrated in association with the flow of the control processing.

First, in Step S70 of the control processing on the first mobile manipulator side, the local controller 11 causes the first mobile manipulator to execute the preparatory conveyance process. Specifically, the local controller 11 causes the first mobile manipulator to take out the original container from the storage location of the original container, convey the original container to the side of the workbench, and install the original container on the workbench. The storage location of the original container may be a medicine shelf or a refrigerator in Fig. 18. In a case in which a medicine to be stored has temperature activity, a refrigerator can be selected as the storage location. A dark place with a light-shielding door is also prepared as a medicine shelf, and in a case in which a medicine to be stored has photoactivity, the dark place can be selected as the storage location. The refrigerator also serves as a dark place. In a case in which the medicine shelf has a door, the mobile manipulator 10 also opens and closes the door and opens and closes the door of the refrigerator.

Then, in Step S72 of the control processing on the workbench robot 20 side, the local controller 21 causes the workbench robot 20 to execute a weighing process similar to the control processing (Fig. 12) in the first embodiment.

Then, in Step S74 of the control processing on the second mobile manipulator side, the local controller 11 causes the second mobile manipulator to execute the storage conveyance process. Specifically, the local controller 11 causes the second mobile manipulator to collect the original container from above the workbench, convey the original container to the storage location of the original container, and install the original container in the storage location.

The above-described robot system according to the fourth embodiment causes the mobile manipulator to execute a preparatory conveyance process of conveying the original container from the storage location of the original container onto the workbench, and a storage conveyance process of conveying the original container from above the workbench to the storage location after executing the weighing process. As a result, it is possible to automate operations including preparation and conveyance of the original container, and storage and conveyance.

The first mobile manipulator and the second mobile manipulator may be the same individual. The roles of the two mobile manipulators can be freely changed.

In the fourth embodiment, it is assumed that the first original container containing the first material and the second original container containing the second material different from the first material are prepared as the original container. In this case, the mobile manipulator and the workbench robot may be caused to execute the preparatory conveyance process, the weighing process, and the storage conveyance process for each of the first material and the second material. As a result, even in the case of weighing the first material and the second material, it is possible to automate the preparatory conveyance and the storage conveyance for the original container.

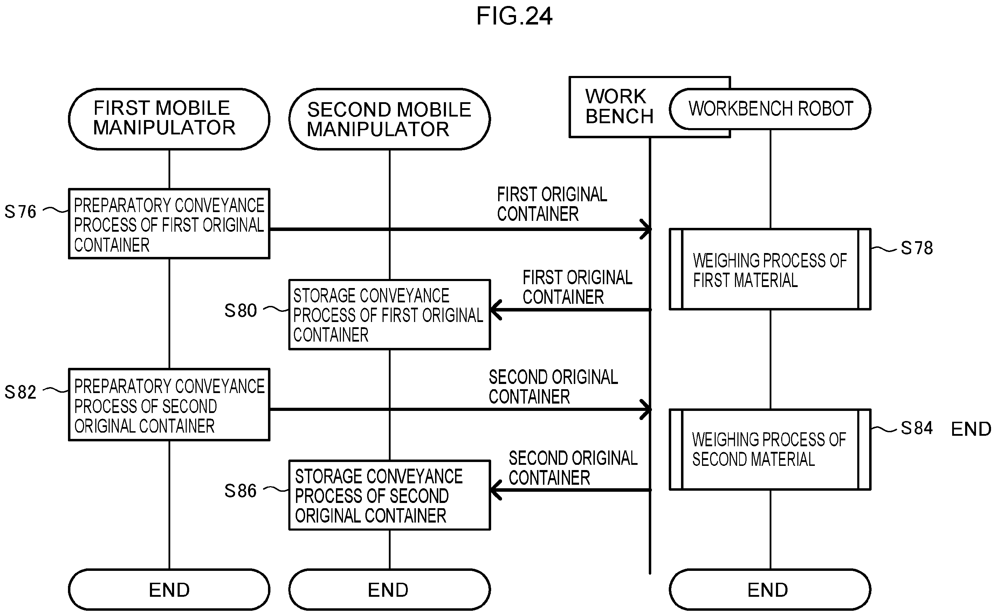

For example, as illustrated in Fig. 24, in a case in which the weighing process of the first material (Step S78) is executed before the weighing process of the second material (Step S84), the first mobile manipulator is caused to execute the preparatory conveyance process of the first original container in Step S76. After the weighing process of the first material by the workbench robot, in Step S80, the second mobile manipulator is caused to execute the storage conveyance process of the first original container. Thereafter, in Step S82, the first mobile manipulator is caused to execute the preparatory conveyance process of the second original container. After the weighing process of the second material by the workbench robot, in Step S86, the second mobile manipulator is caused to execute the storage conveyance process of the second original container. As a result, it is possible to increase the empty place on the workbench. The storage conveyance process of the first original container may be performed at any time after the weighing process of the first material. In a case in which the storage conveyance process of the first original container is executed as soon as possible after the weighing process of the first material, the empty place on the workbench after the collection of the original container is more easily utilized.

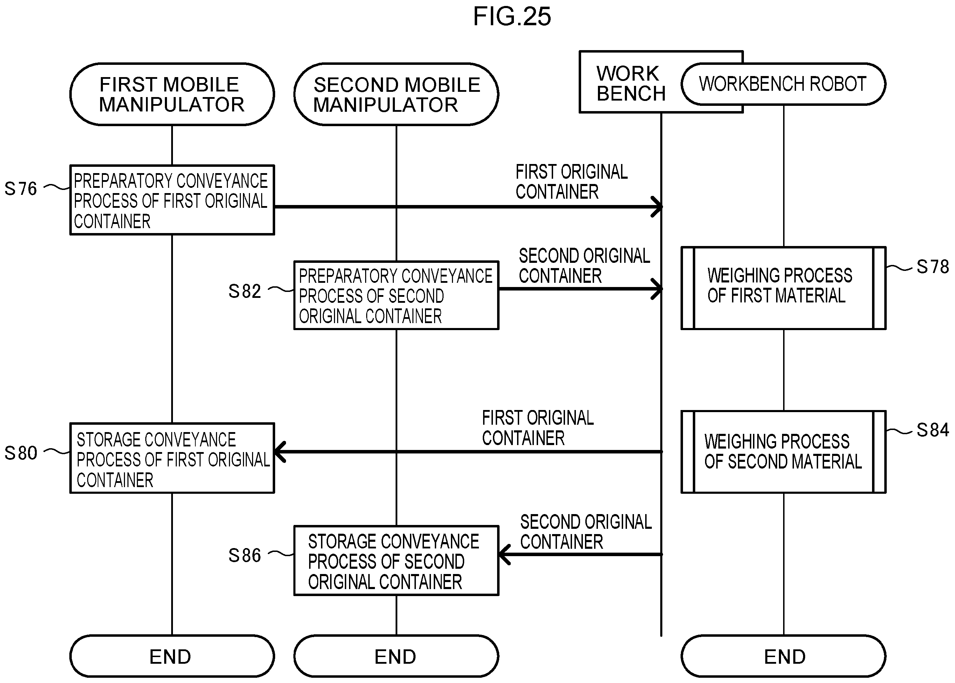

Further, for example, in a case in which the storage location of the first original container is in a refrigerator or in a dark place of a storage shelf, as illustrated in Fig. 25, the centralized controller causes the mobile manipulator to start the storage conveyance process of the first original container before the weighing process of the second material is ended. As a result, it is possible to shorten the time to place the first material in an ambient temperature environment or a bright place as compared with the case in which the storage conveyance process of the first original container is executed together with the storage process of the second original container, for example, after the end of the weighing process of the second material. A timing of bringing the first original container back to the refrigerator or the dark place is preferably as early as possible. It is assumed that the weighing process of the first material is executed before the weighing process of the second material, in the storage location of the second original container in the refrigerator or in a dark place. In this case, as illustrated in Fig. 25, the mobile manipulator is caused to complete the preparatory conveyance process of the second original container after the start of the weighing process of the first material. As a result, it is possible to shorten the time to place the second material in an ambient temperature environment or a bright place as compared with the case in which the preparatory conveyance process of the second original container is executed together with the preparatory conveyance process of the first original container, for example, before the start of the weighing process of the first material. The second original container is preferably taken out of the refrigerator as late as possible.

### <Fifth Embodiment>

Next, a fifth embodiment will be described. In a robot system according to the fifth embodiment, the same components as those of the robot system 300 according to the third embodiment are denoted by the same reference signs, and a detailed description thereof will be omitted.

As illustrated in Fig. 19, a robot system 500 according to the fifth embodiment includes a mobile manipulator 10, a workbench robot 20, and a centralized controller 530. It is assumed that, as the original container, a first original container containing a first material and a second original container containing a second material different from the first material are prepared, and the weighing process of the first material is executed before the weighing process of the second material. In this case, the centralized controller 530 causes the mobile manipulator 10 to collect some or all of the first transfer destination containers containing the first material from above the workbench after the weighing process of the first material.

Next, the operation of the robot system 500 according to the fifth embodiment will be described.

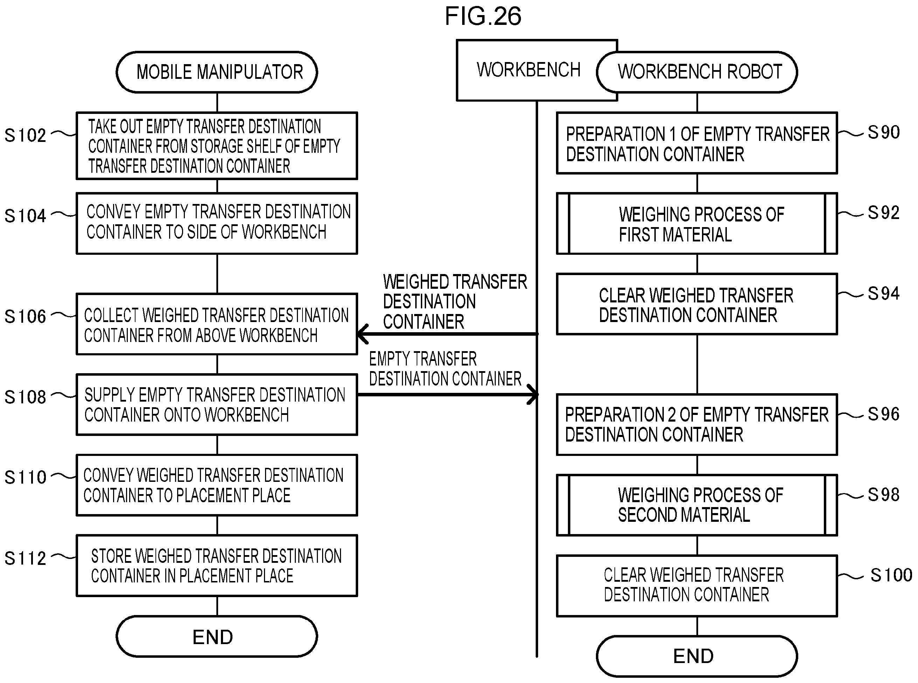

Fig. 26 is a flowchart illustrating a flow of control processing performed by a CPU 31 of the centralized controller 530. Each step of the flowchart on the right side in Fig. 26 is a control process executed by a local controller 21 of a workbench robot 20 in accordance with an instruction of the centralized controller 530. Furthermore, each step of the flowchart on the left side in Fig. 26 is control processing performed by the local controller 11 of the mobile manipulator 10 in accordance with an instruction of the centralized controller 530. In Fig. 26, the state of a transfer destination container disposed on the workbench is illustrated in association with the flow of the control processing.

First, control processing on the workbench robot 20 side will be described.

In Step S90, the local controller 21 causes the workbench robot 20 to perform preparation 1 of an empty transfer destination container. Specifically, the local controller 21 causes the workbench robot 20 to execute a process of moving the container rack containing the empty transfer destination container from the placement place of the transfer destination container on the workbench to a work area.

Then, in Step S92, the local controller 21 causes the workbench robot 20 to execute a weighing process of the first material. The weighing process of the first material is a weighing process including scooping from the original container containing the first material, and specific processing contents are the same as those of the control processing (Fig. 12) in the first embodiment.

Then, in Step S94, the local controller 21 causes the workbench robot 20 to clean the weighed transfer destination container. Specifically, the local controller 21 causes the workbench robot 20 to execute a process of moving the container rack containing the weighed transfer destination container from the work area on the workbench to the placement place of the weighed transfer destination container.

Then, in Step S96, the local controller 21 causes the workbench robot 20 to perform preparation 2 of an empty transfer destination container. Specifically, the local controller 21 causes the workbench robot 20 to execute a process of moving the container rack containing the empty transfer destination container, which is supplied to the placement place of the empty transfer destination container, to the work area by the mobile manipulator 10. The empty transfer destination container may be placed anywhere on the workbench. For example, the placement place of the weighed transfer destination container may be diverted.

Then, in Step S98, the local controller 21 causes the workbench robot 20 to execute a weighing process of the second material. The weighing process of the second material is a weighing process including scooping from the original container containing the second material, and specific processing contents are the same as those of the control processing (Fig. 12) in the first embodiment. Then, in Step S100, the local controller 21 causes the workbench robot 20 to clean the weighed transfer destination container, and the control process on the workbench robot 20 side ends.

Next, control processing on the mobile manipulator 10 side will be described.

In Step S102, the local controller 11 causes the mobile manipulator 10 to take out the container rack from the storage shelf in the laboratory in which the container rack containing an empty transfer destination container is stored. Then, in Step S104, the local controller 11 causes the mobile manipulator 10 to convey the taken-out container rack containing the empty transfer destination container to the side of the workbench.

Then, in Step S106, the local controller 11 causes the mobile manipulator 10 to collect the container rack containing the weighed transfer destination container placed in the placement place of the weighed transfer destination container by the workbench robot 20 in Step S94. Then, in Step S108, the local controller 11 causes the mobile manipulator 10 to supply the conveyed container rack containing the empty transfer destination container to the placement place of the empty transfer destination container on the workbench.

Then, in Step S110, the local controller 11 causes the mobile manipulator 10 to convey the collected container rack containing the weighed transfer destination container to the storage location in the laboratory where the container rack containing the weighed transfer destination container is stored. Then, in Step S112, the local controller 11 causes the mobile manipulator 10 to store the conveyed container rack containing the weighed transfer destination container in the storage location in which the container rack containing the weighed transfer destination container is stored. The control processing on the mobile manipulator 10 side ends. The storage location of the weighed transfer destination container may be the storage shelf or the refrigerator in Fig. 18 as in the case of the original container. As the storage location, a refrigerator can be selected in a case in which the medicine in the transfer destination container has temperature activity, and a dark place (a place with a light-shielding door on the storage shelf or a refrigerator) can be selected in a case in which the medicine in the transfer destination container has light activity.

As described above, the robot system according to the fifth embodiment causes the mobile manipulator to collect the weighed transfer destination container on the workbench. As a result, it is possible to increase the empty place on the workbench. A timing of collecting the transfer destination container containing the first material may be any timing after the weighing process of the first material. It is easier to utilize the empty place on the workbench after the collection as soon as possible.

In addition, the robot system according to the fifth embodiment causes the mobile manipulator to collect the weighed transfer destination container and then supply an empty transfer destination container onto the workbench. As a result, a location for placing an empty transfer destination container that is not yet used on the workbench from an early stage is not necessary.

In the fifth embodiment, it is assumed that the empty transfer destination container for the weighing process of the first material is used in a manner that the workbench robot moves one container rack to the work area from a container rack that is placed densely or stacked and placed in advance in the placement place of the empty transfer destination container on the workbench, but the disclosure is not limited thereto. The empty transfer destination container for the weighing process of the first material may also be supplied by the mobile manipulator.

In addition, an empty transfer destination container for the weighing process of the second material may be used from a container rack that is placed densely or stacked and placed in advance in the placement place of the empty transfer destination container on the workbench. In this case, only the processes on the workbench robot 20 side may be executed without using the mobile manipulator. In this case, the weighed transfer destination container remains on the workbench. Thereafter, the weighed transfer destination containers may be collectively moved to a storage location by a person or the mobile manipulator, or may be collectively made into a solution by a person or the workbench robot.

In addition, in the fifth embodiment, the mobile manipulator collects the transfer destination container in which the first material has been previously weighed, and then supplies an empty transfer destination container for weighing process of the second material onto the workbench. A space for supplying the empty transfer destination container may be a space on the workbench that is empty by collecting the weighed transfer destination container. The mobile manipulator or the workbench robot may move an article on the workbench to change the empty place, if appropriately. If there is enough space on the workbench, an empty transfer destination container for weighing the second material may be supplied first, and then the weighed transfer destination container of the first material may be collected. In this manner, even though there is no space on the mobile manipulator, the transfer destination container can be replaced.

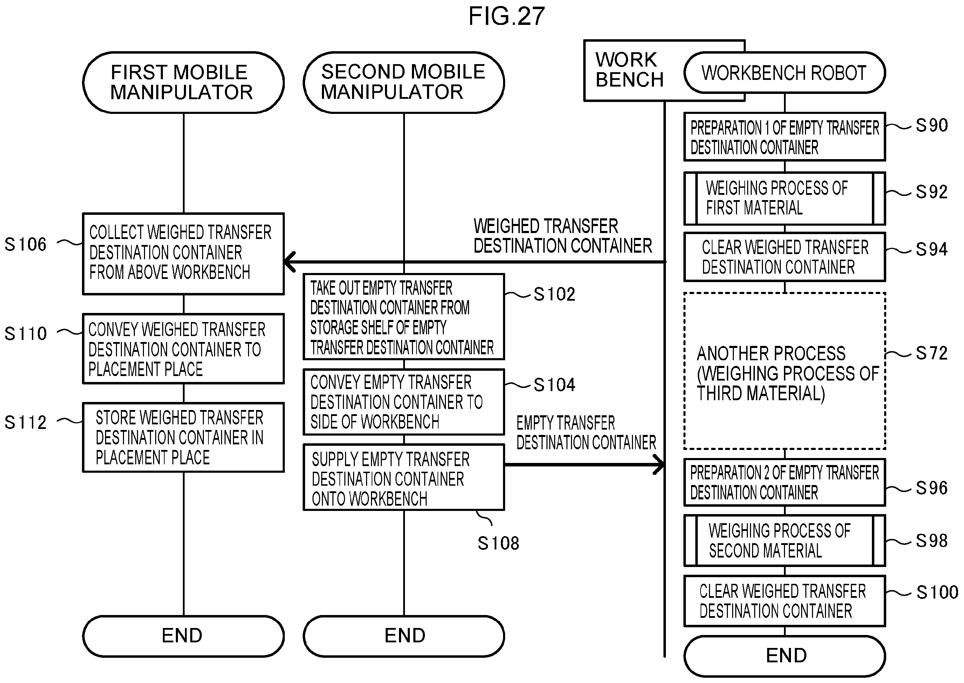

As illustrated in Fig. 27, the transfer destination container in which the weighing process of the first material has been completed may be collected and conveyed first, and then an empty transfer destination container for the weighing process of the second material may be conveyed and supplied. In addition, the first mobile manipulator and the second mobile manipulator may be separate mobile manipulators. In particular, in a case in which another process such as the weighing process of a third material is executed between the weighing process of the first material and the weighing process of the second material, if an empty transfer destination container for the third material can be prepared on the workbench, it is allowable even though it takes time from the collection of the transfer destination container in which the weighing process of the first material has been completed to the supply of the empty transfer destination container for the second material.

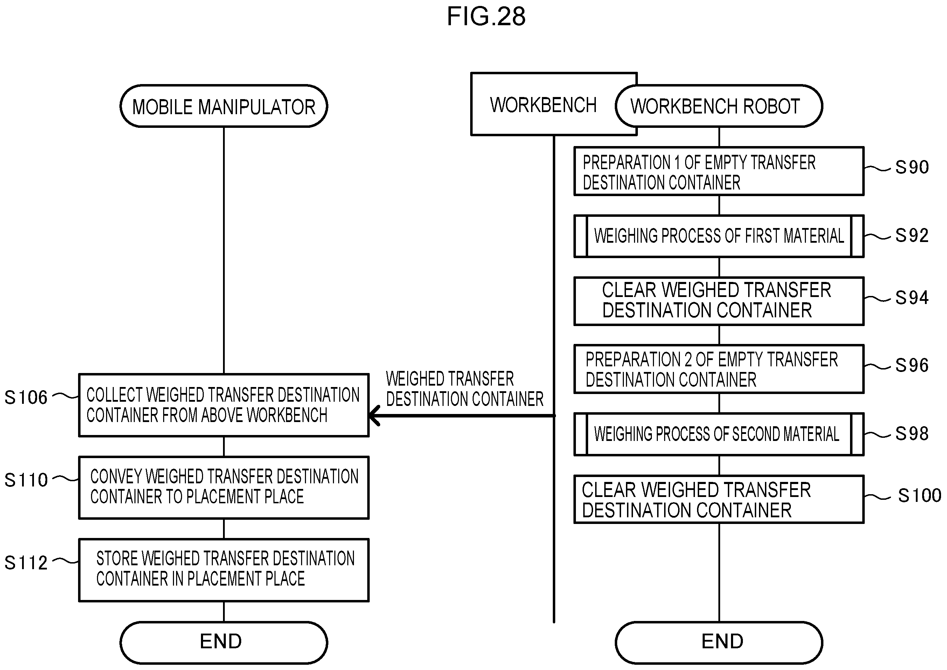

In addition, in a case in which the storage location of the weighed transfer destination container containing the first material is in the refrigerator or in a dark place of the storage shelf, as illustrated in Fig. 28, the process of causing the mobile manipulator to convey some or all of the transfer destination containers containing the first material from above the workbench to the storage location may be started before the weighing process of the second material is ended. As a result, the time for placing the first material in the transfer destination container in an ambient temperature environment or a bright place can be shortened as compared with the case of performing the process of conveying the transfer destination container containing the first material to the placement place after the end of the weighing process of the second material. Note that the weighed transfer destination container of the second material may be transferred to a refrigerator or a dark place by a mobile manipulator, may be transferred to a bright place of a storage shelf if there is no need to refrigerate or shield light, or may be left on a workbench.

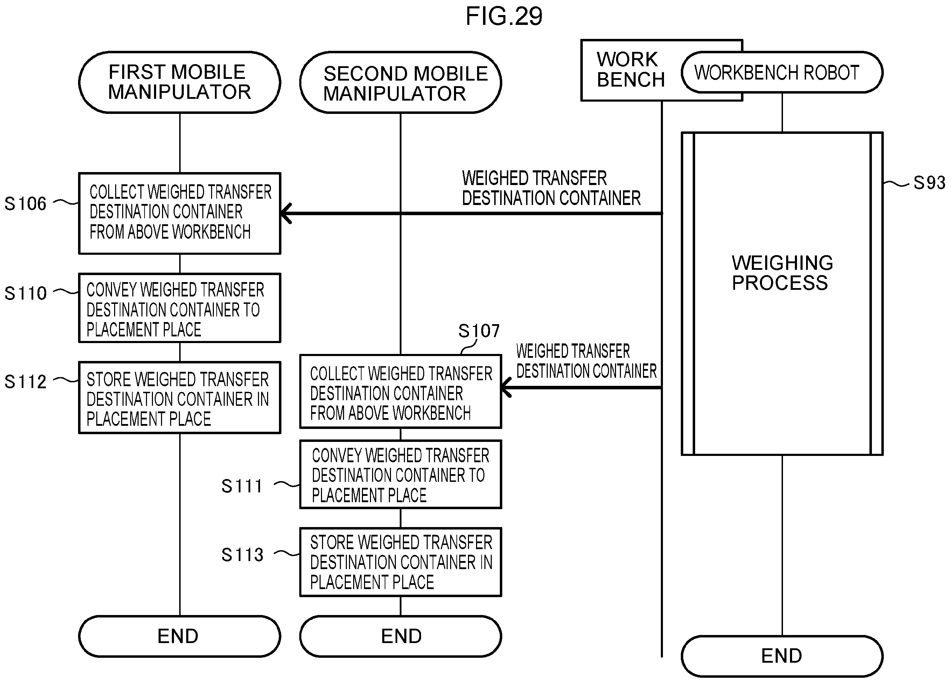

In addition, as illustrated in Fig. 29, in a case in which the same type of material is put into a plurality of transfer destination containers in the weighing process, the mobile manipulator may collect at least a part of the transfer destination container for which the weighing has been completed from the workbench before the weighing of all the transfer destination containers is ended. In Fig. 29, in Step S93, the weighing process of weighing the same type of material into a plurality of transfer destination containers is executed by the workbench robot. The weighing process includes preparation of an empty transfer destination container and clearing of the weighed transfer destination container. In addition, in the middle of the weighing process, the workbench robot executes a process of transferring an empty transfer destination container that becomes insufficient to the work area and a process of retracting the weighed transfer destination container that cannot be placed in the work area to the outside of the work area. Then, the first mobile manipulator collects, conveys, and stores the weighed transfer destination containers for a predetermined number of units in the middle of the weighing process (Steps S106, S110, and S112), and the second mobile manipulator collects, conveys, and stores the weighed transfer destination containers for the next predetermined number of units (Steps S107, S111, and S113). As a result, it is possible to prevent the placement place of the weighed container on the workbench from becoming insufficient. The number of units of collection, conveyance, and storage of the plurality of transfer destination containers by the mobile manipulator may be, for example, the number of units stored in a container rack as illustrated in Fig. 6. That is, collection, conveyance, and storage are performed in units of container racks in a state in which a plurality of transfer destination containers is inserted. In Fig. 29, the processing of collection, conveyance, and storage by the mobile manipulator is illustrated twice, but these processing are performed as many times as necessary for the entire weighing process.

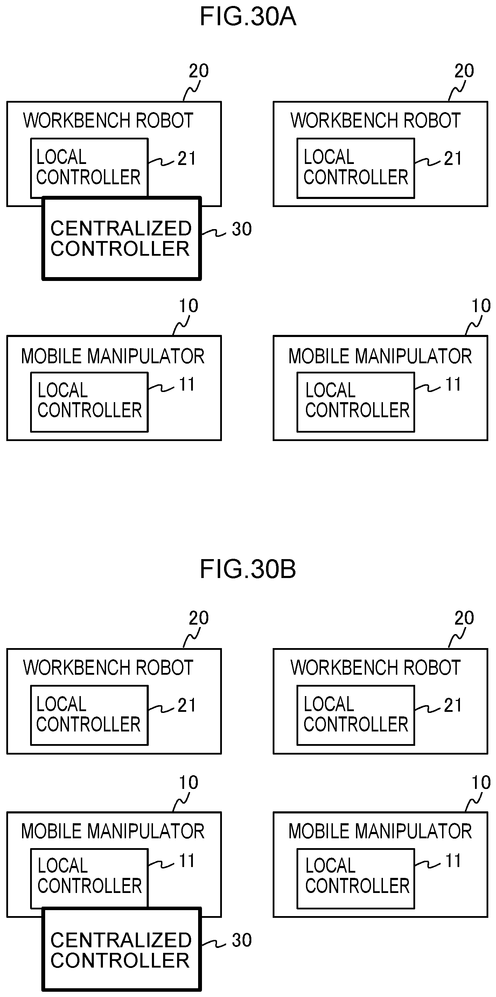

In each of the above embodiments, as illustrated in Fig. 1 or 19, a case in which a centralized controller independent of the mobile manipulator and the workbench robot is used as an example of the controller of the disclosure has been described, but the disclosure is not limited thereto. For example, as illustrated in Fig. 30(A), any one of the workbench robots 20 may be equipped with the centralized controller 30, or as illustrated in Fig. 30(B), any one of the mobile manipulators 10 may be equipped with the centralized controller 30.

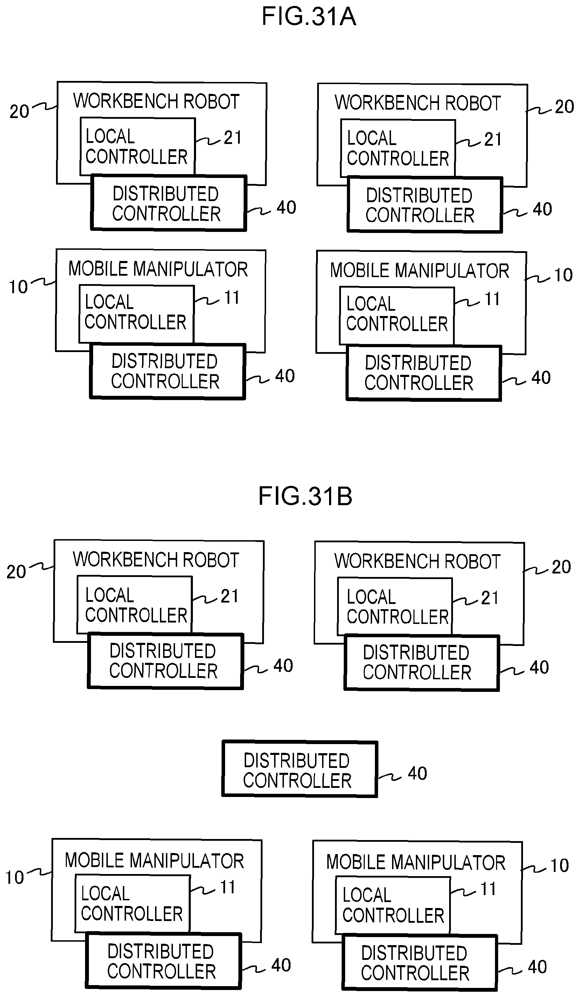

As illustrated in Figs. 31(A) and 31(B), the controller of the disclosure may include a plurality of distributed controllers 40. In this case, the distributed controllers communicate with each other and control the mobile manipulator 10 and the workbench robot 20 to operate in cooperation with each other. For example, in a case in which the mobile manipulator 10 conveys the container onto the workbench, the distributed controller 40 of the mobile manipulator 10 notifies the distributed controller 40 of the workbench robot 20 that the conveyance has been completed. The distributed controller 40 that has received the notification enables the workbench robot 20 to start a process on the conveyed container.

The local controllers 11 and 21 need not be provided in each of the mobile manipulator 10 and the workbench robot 20, and the centralized controller 30 or the distributed controller 40 may control the operation of each motor of each of the mobile manipulator 10 and the workbench robot 20.

The mobile manipulator of each of the above embodiments may convey and place a tool such as a pipette used for work from the storage shelf to the workbench, and collect a used tool from the workbench and store the tool in the storage shelf. In addition, the mobile manipulator 10 may move to a charging station to charge the mobile manipulator itself in a case in which it is time to charge the mobile manipulator.

In each of the above embodiments, the centralized controller may check the operating status of each of the mobile manipulator and the workbench robot, and cause the mobile manipulator and the workbench robot in an empty state to execute the above processes. In addition, for the mobile manipulator, position information in the experimental environment may also be acquired, and a mobile manipulator that can be moved to a designated position most efficiently may be selected from among the mobile manipulators in an empty state, and the above processes may be executed.

In each of the above embodiments, the case in which the mobile manipulator conveys the container or the like between the workbench to which the workbench robot is fixed and the storage shelf or the like has been described, but the disclosure is not limited thereto. For example, a storage shelf or the like may be installed on a workbench to which the workbench robot is fixed or in a range adjacent to the workbench within which a hand of the workbench robot can reach. In this case, the workbench robot may take out the container or the like from the storage shelf or the like and store the container or the like in the storage shelf or the like.

Various processors other than the CPU may execute the control processing performed by the CPU reading software (program) in each of the above embodiments. Examples of the processor in this case include a programmable logic device (PLD) in which a circuit configuration can be changed after manufacturing a field-programmable gate array (FPGA) or the like, a dedicated electric circuit that is a processor having a circuit configuration exclusively designed for executing a specific process, such as an application specific integrated circuit (ASIC). In addition, the control processing may be performed by one of these various processors, or may be executed by a combination of two or more processors of the same type or different types (for example, a plurality of FPGAs or a combination of a CPU and an FPGA). More specifically, the hardware structure of these various processors is an electric circuit in which circuit elements such as semiconductor elements are combined.

In each of the above embodiments, a form in which the program is stored (installed) in the storage device in advance has been described, and the disclosure is not limited thereto. The program may be provided in a form stored in a storage medium such as a CD-ROM, a DVD-ROM, a Blue-ray disc, or a USB memory. The program may be downloaded from an external device via a network.

### Reference Signs List

- 100, 200, 300, 400, 500: robot system
- 10: mobile manipulator
- 11: local controller
- 12: carriage
- 12A: drive wheel
- 13: robot arm
- 13A: arm
- 13B: hand
- 20: workbench robot
- 21: local controller
- 22, 22L, 22R: manipulator
- 22A: arm
- 22B, 22BL, 22BR: hand
- 22B0, 22B0L, 22B0R: hand body
- 22B 1, 22B1L, 22B1R: first finger
- 22B2, 22B2L, 22B2R: second finger
- 22B3, 22B3L, 22B3R: third finger
- 23: vision sensor
- 30, 230, 330, 430, 530: centralized controller
- 31: CPU
- 32: memory
- 33: storage device
- 34: input device
- 35: output device
- 36: storage medium reading device
- 37: communication I/F
- 38: bus
- 40: distributed controller

## Claims

1. A robot system comprising: a workbench robot that is fixed to a workbench and includes a mechanism for gripping an object on the workbench; and a controller that controls an operation of the workbench robot,
wherein the controller executes a weighing process of causing the workbench robot to grip a spatula, perform an operation of scooping and transferring a powdery material, a particle, or a viscous material as a weighing target, which is contained in an original container, to a transfer destination container by using the spatula, measure a weight of the material in the transfer destination container by using a scale, and acquire a measurement result.

2. The robot system according to claim 1, wherein:
the controller further executes a process of acquiring a target value and an allowable range of the weight of the material in the transfer destination container, and
the weighing process includes the controller causing the workbench robot to perform an additional scooping and transferring operation in a case in which the measurement result acquired after the scooping and transferring operation is performed once or a plurality of number of times exceeds the allowable range and is smaller than the target value.

3. The robot system according to claim 2, wherein the weighing process includes the controller causing the workbench robot to perform an operation of scooping and transferring the material in the transfer destination container to the original container by using the spatula in a case in which the measurement result acquired after the scooping and transferring operation is performed once or a plurality of number of times exceeds the allowable range and is greater than the target value.

4. The robot system according to claim 2 or 3, wherein the controller further executes a process of causing the workbench robot to grip, one at a time, a plurality of types of spatulas having different sizes such that, in accordance with a magnitude of a difference between the measurement result and the target value or a magnitude of a difference between an estimated value of the weight of the material in the transfer destination container and the target value, an operation of performing scooping and transferring is performed by using a smaller spatula as the difference becomes smaller.

5. The robot system according to any one of claims 1 to 3, wherein the controller causes the workbench robot to perform the scooping and transferring operation in a state in which the transfer destination container is not placed on the scale, and places the transfer destination container on the scale to perform the measurement.

6. The robot system according to claim 5, wherein the controller causes the workbench robot to perform the scooping and transferring operation in a state in which the transfer destination container is placed on another scale that is not the scale, measure the weight of the material in the transfer destination container by using the other scale, acquire a measurement result by the other scale, and measure the weight of the material in the transfer destination container by placing the transfer destination container on the scale in a case in which the measurement result by the other scale is within a predetermined range including a target value of the weight of the material in the transfer destination container.

7. The robot system according to claim 1 or 2, wherein:
the workbench robot includes a first manipulator and a second manipulator as the mechanism, and
in a case in which the controller causes the workbench robot to perform the scooping and transferring operation, the controller causes the first manipulator to grip the original container to bring the original container into an inclined posture and causes the second manipulator to grip the spatula.

8. The robot system according to any one of claims 1 to 3, wherein the controller further executes a process of making a solution of the material in the transfer destination container by causing the workbench robot to inject a solvent liquid into the transfer destination container after the weighing process.

9. The robot system according to claim 8, wherein the controller executes a process of acquiring a target concentration of a solution, a process of specifying a solvent amount necessary for bringing the solution to the target concentration based on the measurement result, and a process of causing the workbench robot to inject the solvent liquid in the solvent amount into the transfer destination container by using a pipette.

10. The robot system according to claim 2 or 3, wherein,
in a case in which a first original container and a second original container containing the same type of material are prepared as the original container,
in a case in which the weight of the material in the transfer destination container cannot reach the allowable range only by an operation of scooping and transferring the material from the first original container to the transfer destination container due to a small remaining amount of the material in the first original container, the controller causes the workbench robot to perform an operation of scooping and transferring the material from the second original container to the transfer destination container after the operation of scooping and transferring the material from the first original container to the transfer destination container.

11. The robot system according to any one of claims 1 to 3, wherein,
in a case in which a first original container containing a first material and a second original container containing a second material different from the first material are prepared as the original container,
the controller causes the workbench robot to use a first spatula in a case of executing the weighing process of the first material, and then to use a second spatula that is an individual different from the first spatula in a case of executing the weighing process of the second material.

12. The robot system according to claim 11, further comprising:
a mobile manipulator including a mechanism for moving on a floor and a mechanism for gripping an object, wherein:
the controller controls an operation of each of the mobile manipulator and the workbench robot, and
the controller executes a first spatula collection process of causing the mobile manipulator to collect the used first spatula from above the workbench.

13. The robot system according to claim 12, wherein the controller executes a process of causing the mobile manipulator to supply the unused second spatula onto the workbench after executing the first spatula collection process and before executing the weighing process of the second material.

14. The robot system according to any one of claims 1 to 3, further comprising:
a mobile manipulator including a mechanism for moving on a floor and a mechanism for gripping an object, wherein:
the controller controls an operation of each of the mobile manipulator and the workbench robot, and
the controller further executes:
a preparatory conveyance process of causing the mobile manipulator to convey the original container from a placement place of the original container onto the workbench; and
a storage conveyance process of causing the mobile manipulator to convey the original container from above the workbench to the placement place after executing the weighing process.

15. The robot system according to claim 14, wherein,
in a case in which a first original container containing a first material and a second original container containing a second material different from the first material are prepared as the original container,
the controller executes the preparatory conveyance process, the weighing process, and the storage conveyance process for each of the first material and the second material.

16. The robot system according to claim 15, wherein, in a case in which the weighing process for the first material is executed before the weighing process for the second material, the controller executes a process of causing the mobile manipulator to collect the first original container from above the workbench after the weighing process for the first material.

17. The robot system according to claim 16, wherein:
the placement place of the first original container is in a refrigerator or in a dark place, and
the controller causes the mobile manipulator to start the storage conveyance process for the first original container before the weighing process for the second material is ended.

18. The robot system according to claim 15, wherein:
the placement place of the second original container is in a refrigerator or in a dark place, and
in a case of executing the weighing process for the first material before the weighing process for the second material, the controller causes the mobile manipulator to complete the preparatory conveyance process for the second original container after starting the weighing process for the first material.

19. The robot system according to any one of claims 1 to 3, further comprising:
a mobile manipulator including a mechanism for moving on a floor and a mechanism for gripping an object, wherein:
the controller controls an operation of each of the mobile manipulator and the workbench robot, and
in a case in which a first original container containing a first material and a second original container containing a second material different from the first material are prepared as the original container, and the weighing process for the first material is executed before the weighing process for the second material, the controller executes a process of causing the mobile manipulator to collect some or all of transfer destination containers containing the first material from above the workbench after the weighing process for the first material.

20. The robot system according to claim 19, wherein the controller executes a process of collecting some or all of the transfer destination containers from above the workbench, and then executes a process of causing the mobile manipulator to supply an empty transfer destination container onto the workbench.

21. The robot system according to claim 19, wherein the controller starts a process of causing the mobile manipulator to convey some or all of the transfer destination containers containing the first material from above the workbench to a refrigerator or a dark place before ending the weighing process for the second material.

22. The robot system according to any one of claims 1 to 3, further comprising:
a mobile manipulator including a mechanism for moving on a floor and a mechanism for gripping an object, wherein:
the controller controls operation of each of the mobile manipulator and the workbench robot, and
in a case in which the same type of the material is put in a plurality of transfer destination containers in the weighing process, the controller executes a process of causing the mobile manipulator to collect at least some of the transfer destination containers for which weighing has ended from above the workbench before ending the weighing of all the transfer destination containers.
